# EUROPÄISCHE PATENTSCHRIFT

(11) **EP 3 665 178 B1**
(45) Veröffentlichungstag und Bekanntmachung des Hinweises auf die Patenterteilung: **08.10.2025**
(21) Anmeldenummer: 18755423.3
(22) Anmeldetag: 08.08.2018
(51) Int. Cl.: B01J 31/20, C07F 9/54, B01J 23/44, B01J 23/52, B01J 23/755, B01J 31/24, C07B 41/00, C07B 43/00, C07F 15/00, C07F 15/04, C07F 1/12, B01J 31/22, C07B 37/02, C07B 37/04

(54) **YLID-FUNKTIONALISIERTE PHOSPHANE ZUR VERWENDUNG IN METALLKOMPLEXEN UND DER HOMOGENEN KATALYSE**
YLIDE-FUNCTIONALISED PHOSPHANES FOR USE IN METAL COMPLEXES AND HOMOGENEOUS CATALYSIS
PHOSPHANES FONCTIONNALISÉS PAR YLURE S'UTILISANT DANS DES COMPLEXES MÉTALLIQUES ET LA CATALYSE HOMOGÈNE

(30) Priorität: 08.08.2017 DE 102017213817
(43) Veröffentlichungstag der Anmeldung: 17.06.2020
(60) Teilanmeldung: 25197206.3
(73) Patentinhaber: Umicore AG & Co. KG, 63457 Hanau-Wolfgang (DE)
(72) Erfinder: DÄSCHLEIN-GESSNER, Viktoria, 44625 Herne (DE); SCHERPF, Thorsten, T3B 0R9 Calgary, Alberta (CA)
(74) Vertreter: Clauswitz, Kai-Uwe Wolfram
(86) Internationale Anmeldenummer: PCT/EP2018/071550
(87) Internationale Veröffentlichungsnummer: WO 2019/030304

(56) Entgegenhaltungen:
- SCHERPF THORSTEN ET AL: "Ylide-Functionalized Phosphines: Strong Donor Ligands for Homogeneous Catalysis", ANGEWANDTE CHEMIE INTERNATIONAL EDITION, vol. 57, no. 39, 3 June 2018 (2018-06-03), pages 12859 - 12864, XP055783585, ISSN: 1433-7851, DOI: 10.1002/anie.201805372
- S. YOGENDRA ET AL: "Donor-acceptor interactions in tri(phosphonio)methanide dications [(Ph 3 P) 2 CP(X)Ph 2 ] 2+ (X = H, Me, CN, NCS, OH, Cl, OTf, F)", DALTON TRANSACTIONS, vol. 46, no. 44, 1 January 2017 (2017-01-01), Cambridge, pages 15503 - 15511, XP055523212, ISSN: 1477-9226, DOI: 10.1039/C7DT03271D
- SCHMIDBAUR HUBERT ET AL: "Schwache intramolekulare Bindungsbeziehungen: Die konformationsbestimmende attraktive Wechselwirkung zwischen Gold(I)-Zentren", ANGEWANDTE CHEMIE, vol. 100, no. 3, 1 March 1988 (1988-03-01), DE, pages 439 - 441, XP055783622, ISSN: 0044-8249, DOI: 10.1002/ange.19881000336
- SCHMIDBAUR HUBERT ET AL: "Synthese und Struktur zweier Gold-Komplexe des Triphenylphosphonium-[bis(diphenylphosphino)methylids]", HELVETICA CHIMICA ACTA, vol. 69, no. 7, 29 October 1986 (1986-10-29), pages 1748 - 1756, XP055783636, ISSN: 0018-019X, DOI: 10.1002/hlca.19860690732
- KNOLL LOTHAR: "Reaktionen von Phosphoryliden mit Übergangsmetall-Verbindungen, V [1] 1-Diphenylphosphinyl-AlkyMentriphenylphosphoran-carbonyl-chrom- und -eisen-Komplexe Reactions of Phosphorus Ylides with Transition Metal Compounds, V [1] 1-Diphenylphosphinyl Alkylidenetriphenylphosphorane Carbonyl Chrom and Iron", 1 January 1978 (1978-01-01), pages 396 - 398, XP055783644, Retrieved from the Internet <URL:http://zfn.mpdl.mpg.de/data/Reihe_B/33/ZNB-1978-33b-0396.pdf> [retrieved on 20210309]
- REINHARD BENN ET AL: "Reactions of vinylphosphiranes with methylenetrimethylphosphorane", TETRAHEDRON, vol. 40, no. 17, 1 January 1984 (1984-01-01), AMSTERDAM, NL, pages 3273 - 3276, XP055523401, ISSN: 0040-4020, DOI: 10.1016/0040-4020(84)85010-3
- JOSÉ VICENTE ET AL: "New Ylide?, Alkynyl?, and Mixed Alkynyl/Ylide?Gold(I) Complexes", ORGANOMETALLICS, vol. 21, no. 26, 1 December 2002 (2002-12-01), pages 5887 - 5900, XP055523222, ISSN: 0276-7333, DOI: 10.1021/om020753p
- WOLFGANG PETZ ET AL: "An Unusual Product from the Reaction of C(PPh3)2 with [Mn2(CO)10]: Formation and Crystal Structure of [Mn(OPPh3)2{O2CC(PPh3)2}2][Mn(CO)5]2", ZEITSCHRIFT FUR ANORGANISCHE UND ALLGEMEINE CHEMIE, vol. 634, no. 8, 1 July 2008 (2008-07-01), Hoboken, USA, pages 1415 - 1420, XP055523218, ISSN: 0044-2313, DOI: 10.1002/zaac.200800119
- CHRISTIAN REITSAMER ET AL: "Synthesis and Structure of the First Heterodinuclear PCP?Pincer?CDP Complex with a Pd?Au d 8 ?d 10 Pseudo-Closed-Shell Interaction", ORGANOMETALLICS, vol. 28, no. 22, 23 November 2009 (2009-11-23), pages 6617 - 6620, XP055523328, ISSN: 0276-7333, DOI: 10.1021/om900686r
- REINHARD BENN ET AL: "Reactions of vinylphosphiranes with methylenetrimethylphosphorane", TETRAHEDRON, vol. 40, no. 17, 1 January 1984 (1984-01-01), AMSTERDAM, NL, pages 3273 - 3276, XP055523432, ISSN: 0040-4020, DOI: 10.1016/0040-4020(84)85010-3
- SERGIO PASCUAL ET AL: "Synthesis of a Mixed Phosphonium-Sulfonium Bisylide R3P?C?SR2", ANGEWANDTE CHEMIE INTERNATIONAL EDITION, vol. 46, no. 47, 3 December 2007 (2007-12-03), DE, pages 9078 - 9080, XP055523232, ISSN: 1433-7851, DOI: 10.1002/anie.200704071
- H. SCHMIDBAUR: "Synthesis and structure of some new organophosphorus ligands and their metal complexes", PURE & APPLIED CHEMISTRY, vol. 52, no. 4, 1 January 1980 (1980-01-01), GB, pages 1057 - 1062, XP055523404, ISSN: 0033-4545, DOI: 10.1351/pac198052041057
- JENS LANGER: "Dppm-derived phosphonium salts and ylides as ligand precursors for s-block organometallics", ARKIVOC, vol. 2012, no. 3, 10 October 2011 (2011-10-10), US, pages 210, XP055522676, ISSN: 1551-7004, DOI: 10.3998/ark.5550190.0013.316
- DATABASE CA [online] CHEMICAL ABSTRACTS SERVICE, COLUMBUS, OHIO, US; 1968, SCHMIDBAUR, HUBERT ET AL: "Organometalloid-substituted alkylidenephosphoranes", XP002786458, retrieved from STN Database accession no. 1968:506810
- DATABASE CA [online] CHEMICAL ABSTRACTS SERVICE, COLUMBUS, OHIO, US; 1980, SCHMIDBAUR, HUBERT: "Synthesis and structure of some new organophosphorus ligands and their metal complexes", XP002786459, retrieved from STN Database accession no. 1980:568385
- DATABASE CA [online] CHEMICAL ABSTRACTS SERVICE, COLUMBUS, OHIO, US; 1980, SCHMIDBAUR, HUBERT ET AL: "Chemistry of the H3B(CH3)2 group. 2. Synthesis and crystal structure of a salt with the anion [H3B(CH3)2PCHP(CH3)2BH3]-; preliminary stages and related compounds", XP002786460, retrieved from STN Database accession no. 1980:76578
- DATABASE CA [online] CHEMICAL ABSTRACTS SERVICE, COLUMBUS, OHIO, US; 1980, BOLDESKUL, I. E. ET AL: "Stabilization and spectral properties of sulfoxonium ylides", XP002786461, retrieved from STN Database accession no. 1980:118831
- DATABASE CA [online] CHEMICAL ABSTRACTS SERVICE, COLUMBUS, OHIO, US; 1985, SCHMIDBAUR, HUBERT ET AL: "Preparation of unsymmetrical methyl/phenylcarbodiphosphoranes by synthesis or rearrangement", XP002786462, retrieved from STN Database accession no. 1985:62339
- DATABASE CA [online] CHEMICAL ABSTRACTS SERVICE, COLUMBUS, OHIO, US; 2005, AGGARWAL, V. K. ET AL: "Thiocarboxylic acids and derivatives, .alpha.-substituted sulfur ylides", XP002786463, retrieved from STN Database accession no. 2005:951681
- DATABASE CA [online] CHEMICAL ABSTRACTS SERVICE, COLUMBUS, OHIO, US; 1975, KOLODYAZHNYI, O. I.: "Reactions of sulfoxonium ylides with magnesium halides", XP002786464, retrieved from STN Database accession no. 1975:169936
- DATABASE CA [online] CHEMICAL ABSTRACTS SERVICE, COLUMBUS, OHIO, US; 1979, LYSENKO, V. P. ET AL: "Phosphorus-containing sulfoxonium ylides. IV. Ylides containing substituents with trivalent phosphorus", XP002786465, retrieved from STN Database accession no. 1979:523806
- MICHAEL ORGAN ET AL: "Pd-NHC (PEPPSI) Complexes: Synthetic Utility and Computational Studies into Their Reactivity", SYNTHESIS, vol. 2008, no. 17, 1 September 2008 (2008-09-01), STUTTGART, DE., pages 2776 - 2797, XP055523716, ISSN: 0039-7881, DOI: 10.1055/s-2008-1067225

## Beschreibung

Die Erfindung betrifft Ylid-funktionalisierte Phosphanliganden, ihre Herstellung und Verwendung in Übergangsmetallverbindungen sowie deren Einsatz als Katalysatoren in organischen Reaktionen.

### Hintergrund der Erfindung

Die Synthese komplexer Moleküle ist häufig zentraler Bestandteil in der Feinchemie, bspw. um Produkte für die Herstellung von Pharmazeutika, Farbstoffen, Agrochemikalien, Materialien etc. zu gewinnen. Häufig sind hierzu katalytische Prozesse für Funktionalisierungsreaktionen erforderlich, wie z.B. Kupplungsreaktionen (Suzuki, Heck, Sonogashira etc.) oder Hydrofunktionalisierungen (Hydroaminierung, Hydrosilylierung etc.) zur Derivatisierung von Olefinen, Arylen oder Alkinen. Dabei werden die Katalysen entscheidend vom Metall und den eingesetzten Liganden beeinflusst.

Phosphane gehören zu den am häufigsten verwendeten Liganden in der Katalyse. Das Einstellen ihrer elektronischen und sterischen Parameter ist dabei entscheidend, um die Aktivität eines Katalysators zu steigern, Selektivitäten zu bestimmen und die Substratvielfalt erweitern zu können (A. C. Hillier et al., Organometallics, 22: 4322 (2003); H. Clavier et al. Chem. Commun., 46: 841 (2010); Z. L. Niemeyer, A. Milo, D. P. Hickey, M. S. Sigman, Nature Chem. 8: 610 (2016); C. A. Tolman, Chem. Rev.77, 313 (1977); G. Frenking, Organometallics, 28, 3901 (2009)). Die Variabilität von Phosphanen und das Manipulieren ihrer elektronischen und sterischen Eigenschaften begünstigt sie hierbei gegenüber vielen anderen Ligandensystemen. Phosphane werden daher in einer Vielzahl an Reaktionen, wie Palladiumkatalysierten Kupplungsreaktionen (M. A. Wünsche et al., Angew. Chem. Int. Ed., 54, 11857 (2015); D. S. Surry et al., Angew. Chem. Int. Ed., 47, 6338 (2008); R. Martin et al., Acc. Chem. Res., 41, 1461 (2008); S. Kotha et al., Tetrahedron, 58, 9633 (2002)) oder Gold-katalysierten Hydroaminierungsreaktionen (Lavallo, V. et al.; Angew. Chem., Int. Ed., 52, 3172 (2013); E. Mizushima et al., Org. Lett., 5, 3349 (2003); Y. Wang et al., Nature. Commun., 1 (2014)) eingesetzt. Neue aktive Katalysatorsysteme basieren u.a. auf Adamantyl-funktionalisierte Phosphane (DE 10037961 A1, WO 02/10178 A1, L. Chen et al., J. Am. Chem. Soc., 138, 6392 (2016); C. A. Fleckenstein et al., Chem. Soc. Rev., 39, 694 (2010); K. A. Agnew-Francis et al., Adv. Synth. Catal., 358, 675 (2016)) oder Biaryl-Phosphanliganden (US 6307087 B1, D. S. Surry et al., Angew. Chem., 120, 6438 (2008); Angew. Chem. Int. Ed., 47, 6338 (2008); R. A. Altman et al., Nat. Protoc., 2, 3115 (2007); D. S. Surry et al., Chem. Sci., 2, 27 (2011); E. J. Cho et al., Science, 328, 1679 (2010); D. A. Watson et al., Science, 325, 1661 (2009)). Eine Übersicht über wichtige homogene Katalysen mit Phosphanliganden findet sich z.B. in B. Cornils, W. A. Hermann, Applied Homogenous Catalysis with Organometallic Compounds, Vol 12, VCH, Weinheim, 1996.

Das Ligandendesign ist hierbei in der Katalyse ausschlaggebend, um Reaktionen zu ermöglichen oder in gewünschte Richtungen lenken zu können. So ist bspw. häufig die Entwicklung neuer Phosphanliganden erforderlich, um kostengünstigere Ausgangssubstrate (z.B. Chloride anstelle von Iodiden), höhere Katalysatorproduktivitäten und -aktivitäten und eine breitere Substrat- und Reaktionsvielfalt zu realisieren.

Benn et al., Tetrahedron 1984 Bd. 40, Nr. 17, S. 3273-3276 und Sergio Pascual et al., Angewandte Chemie International Edition 2007 Bd. 46, Nr. 47, S. 9078-9080 zeigen Phosphinylidverbindungen, jedoch keine damit gebildeten Komplexe.

Schmidbaur, Pure & Applied Chemistry 1980 Bd. 52, Nr. 4, S. 1057-1062 zeigt eine Verbindung des Typs (Phenyl)₂P-CH=P(Phenyl)₂-CH₂-P(Phenyl)₂ sowie deren Natriumkomplex und Erdalkalimetallkomplexe, jedoch keine entsprechenden Übergangsmetallkomplexe.

Jens Langer, Arkivoc Bd. 2012, Nr. 3, von 2011, S. 210 zeigt Ylide in Tabelle 3 sowie als Verbindung 2 und dessen Lithium-Metallkomplex (Verbindung 4).

Schmidbaur et al., Chemische Berichte 1968, 101(10), 3545-3555, Pure and Applied Chemistry 1980, 52(4), 1057-1062, Angewandte Chemie 1979, 91(10), 848-850 sowie Chemische Berichte 1984, 117(12), 3374-3380, Boldeskul et al., Teoreticheskaya i Eksperimental'nya Khimiya 1979, 15(6), 727-731, Aggarwal et al., Science of Synthesis, 2005, 22, 11-73, Kolodyazhnyi, Zhurnal Obshchei Khimii 1975, 45(3), 704-705 und Lysenko et al., Zhurnal Obshchei Khimii 1979, 49(6), 1230-1235 zeigen phosphorhaltige Ylide, jedoch keine Metallkomplexe von Phophinyliden.

Organ et al., Synthesis Bd. 2008, Nr. 17, S. 2776-2797 zeigt dieVerwendung von NHC-basierten Yliden (die jedoch keine Phosphorylide sind) zur Herstellung von Edelmetall/Übergangsmetallkomplexen und Verfahren zur Durchführung von Kupplungsreaktionen mit diesen Komplexen.

Scherpf et al., Angewandte Chemie International Edition 2018, Bd. 57, Nr. 39, S. 12859-12864 zeigt Metallkomplexe verschiedener Ylide und deren Verwendung als Kupplungskatalysatoren. Als Metall wurde ausschließlich Gold eingesetzt.

Yogendra et al., Dalton Transactions, 2017, Bd. 46, Nr. 44, S. 15503-15511 zeigt Metallkomplexe verschiedener Ylide. Als Metall wurde ausschließlich Gold eingesetzt.

Schmidbaur et al., Angewandte Chemie 1988, Bd. 100, Nr. 3, S. 439-441 und Helvetica Chimica Acta 1986, Bd. 69, Nr. 7, S. 1748-1756 und Knoll, Zeitschrift für Naturforschung 1978, 33b, S. 396-398 zeigen verschiedene Metallkomplexe mit Phosphanliganden. Als Metall wurden ausschließlich Gold oder Chrom verwendet.

### Detaillierte Beschreibung der Erfindung

Es wurde nun gefunden, dass die nachfolgend beschriebenen Ylid-funktionalisierten Phosphanliganden der Formeln (I) und (II) mit einem carbanionischen Kohlenstoffzentrum in α-Stellung zum Phosphor und ihren Übergangsmetallkomplexen die gestellte Aufgabe erfüllen. Die Erfindung betrifft somit:

Metallkomplexe der Phosphanliganden, die die Formel (I) oder (II) 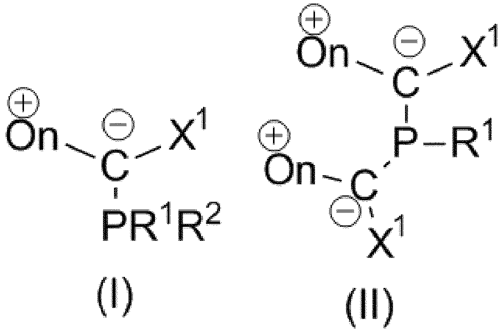 aufweisen, wobei On eine Phosphoniumgruppe -P(R³R⁴R⁵) wobei R³, R⁴ und R⁵ unabhängig voneinander ausgewählt sind aus der Gruppe bestehend aus C₁₋₆ Alkylgruppen, C_{4-C10} Cycloalkylgruppen, C₆₋₁₀ Arylgruppen, X¹ ausgewählt ist aus der Gruppe bestehend aus geradkettigen, verzweigten oder zyklischen C₁₋₆ Alkylgruppen, C₆₋₁₀ Arylgruppen, einfach- oder mehrfach ungesättigten, geradkettigen, verzweigten oder zyklischen C₂₋₆ Alkenylgruppen, eine Trialkylsilyl- (-SiR³R⁴R⁵), Arylsulfonylgruppe (R¹²-SO₂R³)mit R¹² = C₆₋₁₀Aryl) und R¹ und R² C₆₋₁₀ Arylgruppen oder C₁₋₆ Alkyl- und Cycloalkylgruppen.

Es können R³, R⁴ und R⁵ unabhängig voneinander ausgewählt sein aus der Gruppe bestehend aus Methyl, Ethyl, Butyl, Cyclohexyl, Phenyl und deren Kombinationen. R³, R⁴ und R⁵ können gleich sein und ausgewählt aus der Gruppe bestehend aus Methyl, Ethyl, Butyl, Cyclohexyl, Phenyl und deren Kombinationen, insbesondere Cyclohexyl und Phenyl.

X¹ kann ausgewählt sein aus der Gruppe bestehend aus Methyl, Ethyl, Cyclohexyl, Phenyl, p-Tolyl, Trimethylsilyl-, p-Tolylsulfonyl oder deren Kombinationen.

R¹ und R² können unabhängig voneinander ausgewählt sein aus der Gruppe bestehend aus Phenyl, Cyclohexyl, Methyl und deren Kombinationen.

Diese Metallkomplexe sind Edelmetall- oder Übergangsmetallkomplexe der Gruppe 10 oder 11 des Periodensystems der Elemente, nämlich Kupfer, Silber, Platin, Palladium und Nickel, insbesondere Palladium.

Die Edelmetall- oder Übergangsmetallkomplexe und -salze mit den oben beschriebenen Phosphanliganden können in der homogenen Katalyse eingesetzt werden.

Insbesondere können sie als Katalysatoren eingesetzt werden, wobei die Liganden *in situ* zu den Metall- Edelmetall- oder Übergangsmetallprecursorverbindungen gegeben oder die isolierten Metall- Edelmetall- oder Übergangsmetallkomplexe der Phosphanliganden in der Synthese von Übergangsmetallkomplexen oder Übergangsmetallsalzen eingesetzt werden.

In den obigen Verwendungen können die Liganden
(i) in katalytischen Hydrofunktionalisierungsreaktionen von Alkinen und Alkenen;
(ii) in katalytischen Hydroaminierungsreaktionen von Alkinen und Alkenen;
(iii) in katalytischen O-H-Additionsreaktionen an Alkinen und Alkenen;
(iv) in katalytischen Kupplungsreaktionen;
(v) in katalytischen Suzuki-Kupplungsreaktionen, insbesondere für die Darstellung von Biarylen;
(vi) in katalytischen Kreuz-Kupplungsreaktionen, insbesondere C-N und C-O-Kupplungsreaktionen; und/oder
(vii) in katalytischen Heck-Kupplungsreaktionen, insbesondere zur Darstellung von arylierten Olefinen, und Sonogashira-Kupplungsreaktionen, insbesondere zur Darstellung von arylierten und alkenylierten Alkinen;
eingesetzt werden.

Ebenso können R¹ und R² unabhängig voneinander ausgewählt sein aus der Gruppe bestehend aus Phenyl, Cyclohexyl, Methyl, tert.-Butyl und deren Kombinationen.

Vorteilhafte Liganden können insbesondere Liganden der obigen Formeln (I) oder (II) sein mit den Substituenten gemäß folgenden Tabelle A:

| Nr. | R1, R2 | On | X |
|---|---|---|---|
| 1 | Tert.-Butyl | PPh3 | Phenyl |
| 2 | Phenyl | PPh3 | Phenyl |
| 3 | Methyl | PPh3 | Phenyl |
| 4 | Cyclohexyl | PPh3 | Phenyl |
| 5 | Tert.-Butyl | PCy3 | Phenyl |
| 6 | Phenyl | PCy3 | Phenyl |
| 7 | Methyl | PCy3 | Phenyl |
| 8 | Cyclohexyl | PCy3 | Phenyl |
| 9 | Tert.-Butyl | PPh3 | Methyl |
| 10 | Phenyl | PPh3 | Methyl |
| 11 | Methyl | PPh3 | Methyl |
| 12 | Cyclohexyl | PPh3 | Methyl |
| 13 | Tert.-Butyl | PCy3 | Methyl |
| 14 | Phenyl | PCy3 | Methyl |
| 15 | Methyl | PCy3 | Methyl |
| 16 | Cyclohexyl | PCy3 | Methyl |
| 17 | Tert.-Butyl | PPh3 | Trimethylsilyl |
| 18 | Phenyl | PPh3 | Trimethylsilyl |
| 19 | Methyl | PPh3 | Trimethylsilyl |
| 20 | Cyclohexyl | PPh3 | Trimethylsilyl |
| 21 | Tert.-Butyl | PCy3 | Trimethylsilyl |
| 22 | Phenyl | PCy3 | Trimethylsilyl |
| 23 | Methyl | PCy3 | Trimethylsilyl |
| 24 | Cyclohexyl | PCy3 | Trimethylsilyl |
| 25 | Tert.-Butyl | PPh3 | Toluoysulfonyl SO2Tol |
| 26 | Phenyl | PPh3 | Toluoysulfonyl SO2Tol |
| 27 | Methyl | PPh3 | Toluoysulfonyl SO2Tol |
| 28 | Cyclohexyl | PPh3 | Toluoysulfonyl SO2Tol |
| 29 | Tert.-Butyl | PCy3 | Toluoysulfonyl SO2Tol |
| 30 | Phenyl | PCy3 | Toluoysulfonyl SO2Tol |
| 31 | Methyl | PCy3 | Toluoysulfonyl SO2Tol |
| 32 | Cyclohexyl | PCy3 | Toluoysulfonyl SO2Tol |

wobei PPh3 für Triphenylphosphin und PCy3 für Tricyclohexylphosphin stehen.

Die Metallkomplexe sind Edelmetall- oder Übergangsmetallkomplexe der Metalle Kupfer, Silber, Platin, Palladium und Nickel, bevorzugt Palladium

Die Metallkomplexe können auch weitere Liganden aufweisen, wie neutrale Elektronendonorliganden, zum Beispiel Dibenzylidenaceton (DBA), Kohlenmonoxid CO, NHC-Liganden, Phosphine wie Triphenylphosphin oder Tricyclohexylphosphin und Amine, wie beispielsweise Triethylamin oder Tributylamin. Auch geladene Liganden wie Halogene, insbesondere Chlorid, Bromid und Iodid oder Pseudohalogenide Mesylat, Triflat, Acetat wie können vorhanden sein. Substituierte oder unsubstituierte Aryl- und Allylliganden können ebenfalls vorhanden sein wie auch Mono- oder Diolefine, die linear oder cyclisch sein können, wie zum Beispiel Cyclooctadien.

Vorteilhaft können die Metallkomplexe also zusätzlich insbesondere Liganden ausgewählt aus der Gruppe bestehend aus Dibenzylidenaceton (DBA), Kohlenmonoxid CO, Triphenylphosphin, Tricyclohexylphosphin, Triethylamin, Tributylamin, Pyridyl, Chlorid, Bromid, Iodid, Mesylat, Triflat, Acetat, Allyl, Phenyl, p-Toluyl, o-Toluyl, Mesityl, Cyclooctadien, und deren Kombinationen.

Insbesondere können Metallkomplexe der folgenden Tabellen B bis F verwendet werden.

### Tabelle B

Tabelle B zeigt Platinkomplexe mit mindestens einem der 32 in Tabelle A aufgeführten Phosphanliganden sowie einem oder mehreren der Liganden ausgewählt aus der Gruppe bestehend aus Dibenzylidenaceton (DBA), Kohlenmonoxid CO, Triphenylphosphin, Tricyclohexylphosphin, Triethylamin, Tributylamin, Pyridyl, Chlorid, Bromid, Iodid, Mesylat, Triflat, Acetat, Allyl, Phenyl, p-Toluyl, o-Toluyl, Mesityl, Cyclooctadien, und deren Kombinationen.

### Tabelle C

Tabelle C zeigt Palladiumkomplexe mit mindestens einem der 32 in Tabelle A aufgeführten Phosphanliganden sowie einem oder mehreren der Liganden ausgewählt aus der Gruppe bestehend aus Dibenzylidenaceton (DBA), Kohlenmonoxid CO, Triphenylphosphin, Tricyclohexylphosphin, Triethylamin, Tributylamin, Pyridyl, Chlorid, Bromid, Iodid, Mesylat, Triflat, Acetat, Allyl, Phenyl, p-Toluyl, o-Toluyl, Mesityl, Cyclooctadien, und deren Kombinationen.

### Tabelle D

Tabelle D zeigt Nickelkomplexe mit mindestens einem der 32 in Tabelle A aufgeführten Phosphanliganden sowie einem oder mehreren der Liganden ausgewählt aus der Gruppe bestehend aus Dibenzylidenaceton (DBA), Kohlenmonoxid CO, Triphenylphosphin, Tricyclohexylphosphin, Triethylamin, Tributylamin, Pyridyl, Chlorid, Bromid, Iodid, Mesylat, Triflat, Acetat, Allyl, Phenyl, p-Toluyl, o-Toluyl, Mesityl, Cyclooctadien, und deren Kombinationen.

### Tabelle E

Tabelle E zeigt Kupferkomplexe mit mindestens einem der 32 in Tabelle A aufgeführten Phosphanliganden sowie einem oder mehreren der Liganden ausgewählt aus der Gruppe bestehend aus Dibenzylidenaceton (DBA), Kohlenmonoxid CO, Triphenylphosphin, Tricyclohexylphosphin, Triethylamin, Tributylamin, Pyridyl, Chlorid, Bromid, Iodid, Mesylat, Triflat, Acetat, Allyl, Phenyl, p-Toluyl, o-Toluyl, Mesityl, Cyclooctadien, und deren Kombinationen.

### Tabelle F

Tabelle F zeigt Silberkomplexe mit mindestens einem der 32 in Tabelle A aufgeführten Phosphanliganden sowie einem oder mehreren der Liganden ausgewählt aus der Gruppe bestehend aus Dibenzylidenaceton (DBA), Kohlenmonoxid CO, Triphenylphosphin, Tricyclohexylphosphin, Triethylamin, Tributylamin, Pyridyl, Chlorid, Bromid, Iodid, Mesylat, Triflat, Acetat, Allyl, Phenyl, p-Toluyl, o-Toluyl, Mesityl, Cyclooctadien, und deren Kombinationen.

Die Metallkomplexe können auf an sich bekannte Weise, wie zum Beispiel durch Umsetzung von Metallsalzen oder Komplexen, welche vorteilhaft bereits gewünschte weitere Liganden tragen (wie beispielsweise Nickeltetracarbonyl, Allylpalladium(II)chlorid-Dimer, Palladiumacetat, Palladiumchlorid oder Tris(Dibenzylidenaceton)-dipalladium(0) x Dibenzylidenaceton) mit einem oder mehreren Phosphanliganden, gegebenenfalls in einem geeigneten Lösemittel, erhalten werden.

Die oben beschriebenen Metallkomplexe können in der homogenen Katalyse eingesetzt werden, insbesondere in Kupplungsreaktionen, wobei die Kopplungsreaktion ausgewählt sein kann aus der Gruppe bestehend aus
(i) katalytischen Hydrofunktionalisierungsreaktionen von Alkinen und Alkenen;
(ii) katalytischen Hydroaminierungsreaktionen von Alkinen und Alkenen;
(iii) katalytischen O-H-Additionsreaktionen an Alkinen und Alkenen;
(iv) katalytischen Kupplungsreaktionen;
(v) katalytischen Suzuki-Kupplungsreaktionen, insbesondere für die Darstellung von Biarylen;
(vi) katalytischen Kreuz-Kupplungsreaktionen, insbesondere C-N und C-O-Kupplungsreaktionen; und/oder
(vii) katalytischen Heck-Kupplungsreaktionen, insbesondere zur Darstellung von arylierten Olefinen, und Sonogashira-Kupplungsreaktionen, insbesondere zur Darstellung von arylierten und alkenylierten Alkinen

Ausserdem können die Metallkomplexe ein Palladium-allyl-Komplexe der Struktur (V) oder Palladium-Aryl-Komplexe der Struktur (VI) sein: 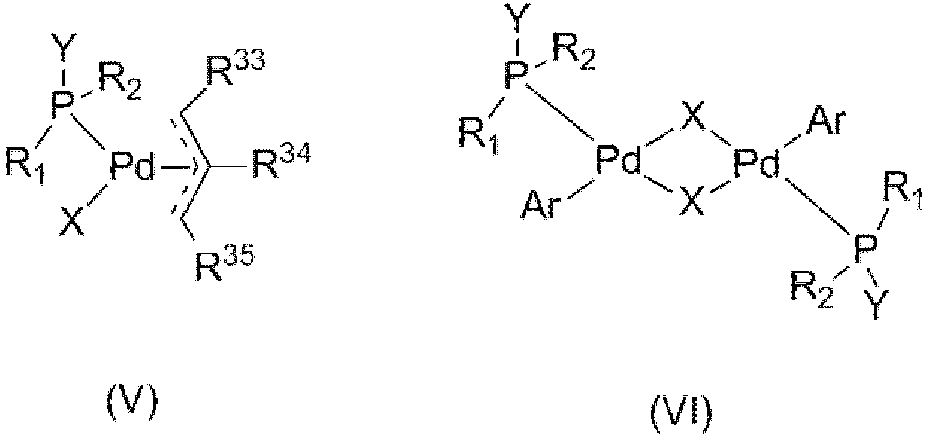 mit 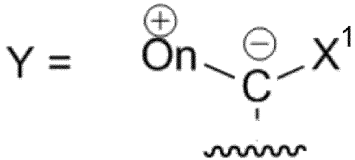
wobei X ein Anion ist,
R¹,R², X¹ wie in den vorstehenden Punkten definiert sein können,
R³³, R³⁴ und R³⁵, unabhängig voneinander ausgewählt sein können aus H, Alkyl-, Aryl- und Heteroarylgruppen, die unsubstituiert oder mit funktionellen Gruppen substituiert sein können,
   oder
mindestens zwei von R³³, R³⁴ und R³⁵ einen carbocyclischen Ring mit 5 bis 14 Kohlenstoffatomen bilden können,

Ar eine substituierte oder unsubstituierte, insbesondere eine substituierte ArylGruppe darstellen kann.

Hierbei können wobei R³³, R³⁴ und R³⁵, unabhängig voneinander ausgewählt sein aus geradkettigen, verzweigten oder zyklischen C₁₋₁₀ Alkylgruppen, vorzugsweise aus C₁₋₆ Alkylgruppen oder C_{4-C10} Cycloalkylgruppen, die Arylgruppen ausgewählt sein aus C₆₋₁₄ Arylgruppen, vorzugsweise aus C₆₋₁₀ Arylgruppen, die Alkenylgruppen ausgewählt sein aus einfach- oder mehrfach ungesättigten, geradkettigen, verzweigten oder zyklischen C₂₋₁₀ Alkenylgruppen, vorzugsweise aus C₂₋₆ Alkenylgruppen, und die Heteroarylgruppen ausgewählt sein aus C₆₋₁₄ Heteroarylgruppen, vorzugsweise aus C₆₋₁₀ Heteroarylgruppen, die 1 bis 5 Heteroatome ausgewählt aus N, O und S aufweisen, wobei die vorgenannten Gruppen alle mit funktionellen Gruppen substituiert sein können und/oder
mindestens zwei von R³³, R³⁴ und R³⁵ einen carbocyclischen Ring bilden, der eine C₄₋C₁₀ Cycloalkylgruppe oder eine C₆₋₁₄ Arylgruppe ist, die mit einer oder mehreren funktionellen Gruppen substituiert sein können, und
Ar kann ausgewählt sein aus C₆₋₁₄ Arylgruppen, vorzugsweise aus C₆₋₁₀ Arylgruppen, und die Heteroarylgruppen ausgewählt sein können aus C₆₋₁₄ Heteroarylgruppen, vorzugsweise aus C₆₋ C₁₀ Heteroarylgruppen, die 1 bis 5 Heteroatome ausgewählt aus N, O und S aufweisen können, wobei die vorgenannten Gruppen alle mit funktionellen Gruppen substituiert sein können, und
die funktionellen Gruppen ausgewählt sein können aus Alkyl- (-R¹¹), insbesondere C₁₋₆ Alkylgruppen, C₆₋₁₀ Aryl- (-R¹²), Halogen- (-Hal), Hydroxy- (-OH), Cyano- (-CN), Alkoxy- (-OR³), Amino- (-NR¹¹₂, -NHR¹¹, NH₂), Mercapto- (-SH, -SR¹¹), wobei R¹¹, unabhängig von weiteren Resten R¹¹, ausgewählt ist aus C₁₋₆ Alkylresten.

Insbesondere können X ausgewählt sein aus der Gruppe Halogen, Tosylat, Nosylat und Mesylat, spezifisch kann X ausgewählt sein aus der Gruppe Fluor, Chlor, Brom, Iod, Tosylat, Nosylat und Mesylat und/oder Aryl ausgewählt ist aus Phenyl, m-Tolyl, p-Tolyl, o-Tolyl, Mesityl, 1,3-Diisopropylphenyl.

Palladiumkomplexe, die mindestens einen der oben beschriebenen Phosphanliganden enthalten, insbesondere die beschriebenden Palladium-Allylkomplexe und Palladium-Arylkomplexe können in der homogenen Katalyse eingesetzt werden, insbesondere in Kupplungsreaktionen, wobei die Kupplungsreaktion ausgewählt sein kann aus der Gruppe bestehend aus
(i) katalytischen Hydrofunktionalisierungsreaktionen von Alkinen und Alkenen;
(ii) katalytischen Hydroaminierungsreaktionen von Alkinen und Alkenen;
(iii) katalytischen O-H-Additionsreaktionen an Alkinen und Alkenen;
(iv) katalytischen Kupplungsreaktionen;
(v) katalytischen Suzuki-Kupplungsreaktionen, insbesondere für die Darstellung von Biarylen;
(vi) katalytischen Kreuz-Kupplungsreaktionen, insbesondere C-N und C-O-Kupplungsreaktionen; und/oder
(vii) katalytischen Heck-Kupplungsreaktionen, insbesondere zur Darstellung von arylierten Olefinen, und Sonogashira-Kupplungsreaktionen, insbesondere zur Darstellung von arylierten und alkenylierten Alkinen.

Ausserdem betrifft die Patentanmeldung ein Verfahren zur Durchführung einer Kupplungsreaktion enthaltend die Schritte
- Bereitstellen eines Reaktionsgemischs enthaltend mindestens Substrat, Kupplungspartner sowie mindestens einen der obigen Metallkomplexe oder einen Metallkomplex enthaltend einen der weiter oben beschriebenen Liganden; und
- Reagieren von Substrat mit dem Kupplungspartner in der Gegenwart des Metallkomplexes oder dessen Derivat, so dass ein Kupplungsprodukt entsteht.

Auch hierbei ist das Metall des Metallkomplexes, wie oben beschrieben, ein Edelmetall und/oder ein Übergangsmetall ausgewählt ist aus der Gruppe bestehend aus Kupfer, Silber, Platin, Palladium, Nickel und deren Kombinationen.

Das Substrat kann eine substituierte aromatische Verbindung sein, insbesondere kann die substituierte aromatische Verbindung ein aromatische oder heteroaromatische Verbindung sein. Diese kann unter Anderem mit einer Abgangsgruppe oder einer ungesättigten aliphatischen Gruppe oder einer Abgangsgruppe substituiert sein, wobei es sich bewährt hat, wenn sie Abgangsgruppe ausgewählt ist aus der Gruppe bestehend aus Halogen, Tosylat, Nosylat und Mesylat und/oder die ungesättigte aliphatische Gruppe ausgewählt ist aus der Gruppe bestehend aus Alken, oder Alkin, insbesondere mit 2 bis 12, insbesondere 2 bis 8 Kohlenstoffatomen.

Der Kupplungspartner kann eine organometallische Verbnindung umfassen, die insbesondere ausgewählt sein kann aus der Gruppe bestehend aus organischen Borverbindungen, organischen Lithiumverbindungen, organischen Zinkverbindungen, organischen Lithiumverbindungen und Grignardverbindungen, wobei vorteilhaft die organometallische Verbindung mindestens einen aromatischen Rest umfasst oder wobei die organometallische Verbindung mindestens einen ungesättigten aliphatischen Rest umfaßt, oder wobei die organometallische Verbindung mindestens einen gesättigten aliphatischen Rest umfaßt.

Die Erfindung wird an Hand der nachfolgenden Beispiele näher erläutert. Diese stehen exemplarisch für die Darstellung der Ylid-funktionalisierten Phosphane, ihren Übergangsmetallkomplexen und dem Einsatz in der Katalyse und sind keinesfalls als Einschränkung des Schutzumfangs der Erfindung zu verstehen.

### Beispiele

### Beispiel 1: Darstellung von Ylid-funktionalisierten Phosphanen

### A) Darstellung über metallierte Ylide mit Monochlorphosphanen (Route A)

Darstellung des Ylid-funktionalisierten Biscyclohexylphosphans mit On = PPh₃, R=R'=Cy, X = SO₂Tol aus dem metallierten Ylid [Ph₃PCSO₂Tol]Na 2.05 g (4.5 mmol) des metallierten Ylids [Ph₃PCSO₂Tol]Na wurden in 40 ml THF gelöst und auf -50 °C abgekühlt. Bei dieser Temperatur 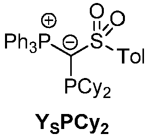 wurden 1.13 ml (5.4 mmol) Dicyclohexylchlorphosphan langsam zur gelben Reaktionslösung hinzugegeben, die sich beim Aufwärmen auf Raumtemperatur schließlich entfärbte. Nach Entfernen des Lösungsmittels im Vakuum wurde der gebildetet farblose Feststoff in 30 mL Toluol aufgenommen und die Suspension filtriert. Erneute Reduktion des Lösungsmittels führte zur Bildung eines Feststoffes. Dieser wurde abfiltriert, wodurch das Produkt als farbloser Feststoff gewonnen werden konnte (Ausbeute: 1.97 g, 3.2 mmol, 71 %).

¹H-NMR (250 MHz, THF-d⁸): δ = 0.78-1.29 (m, 10H, C*H*_{Cy}), 1.47-1.79 (m, 10H, C*H*cy), 2.13-2.23 (m, 2H, C*H*cy), 2.31 (s, 3H, C*H*_{STol}), 6.90-7.10 (m, 4H, C*H*_{STol}, meta/ortho), 7.35-7.61 (m, 9H, C*H*_{PPh}, meta/para), 7.65-7.78 (m, 6H, C*H*_{PPh}, ortho). ³¹P{¹H}-NMR (250 MHz, THF-d⁸): δ = -5.79 (d, ²*J*_{PP} = 164.3 Hz: *P*Cy)*,* 25.58 (d, ²J_{PP} = 164.4 Hz; *P*Ph₃). TEP = 2055.1 cm⁻¹.

Entsprechend dieser Vorschrift erfolgte ebenfalls die Darstellung der einfachen Ylid-funktionalisierten Phosphane mit:
On = PPh₃, X = SO₂Tol, R=R'=Ph (T. Scherpf et al., Angew. Chem. Int. Ed., 54, 8542 (2015)), *i*Pr, Adamantyl oder Cyclohexyl
On = PPh₃, X = CN, R=R'=Ph oder Cy.

Darüber hinaus wurden entsprechend dieser Vorschrift das Bisylid-funktionalisierte Posphan Y₂PPh mit On = PPh₃ und X = CN dargestellt.

### B) Darstellung über die Dichlorphosphan-Zwischenstufe (Route A)

Darstellung des Ylid-funktionalisierten Dimethylphosphans mit On = PPh₃, R=R'=Me, X = SO₂Tol aus dem metallierten Ylid [Ph₃PCSO₂Tol]Na 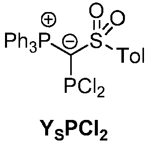 In einem 50 mL Schlenkrohr wurden 3.01 g (6.66 mmol) des metallierten Ylids in 35 mL THF gelöst. Danach wurden 0.70 mL (1.10 g, 7.99 mmol) Phosphortrichlorid schnell zugetropft und für 5 min zum Sieden erhitzt. Nachdem die Reaktionslösung über Nacht gerührt wurde, wurde das Lösemittel im Vakuum entfernt und der Feststoff in Dichlormethan gelöst. Anschließend wurde die Suspension über eine Filterkanüle filtriert und das Lösemittel erneut im Vakuum abgezogen. Der dabei ausgefallene Feststoff wurde mit Benzol gewaschen, über eine Umkehrfritte abfiltriert und im Vakuum getrocknet. Das Ylid-funktionalisierte Dichlorphosphan kann so als farbloser Feststoff gewonnen werden (Ausbeute: 2.88 g, 5.44 mmol, 82 %).

¹H-NMR (500.1 MHz, CD₂Cl₂): δ [ppm] = 2.37 (s, 3 H; CH₃), 7.04-7.07 (m, 2 H; CH_{Tol,meta}), 7.22-7.25 (m, 2 H; CH_{Tol,ortho}), 7.49-7.55 (m, 6 H; CH_{PPh,meta}), 7.64-7.69 (m, 3 H; CH_{PPh,para}), 7.71-7.77 (m, 6 H; CH_{PPh,ortho}). ¹³C{¹H}-NMR (125.8 MHz, CD₂Cl₂): δ [ppm] = 21.5 (s, CH₃), 62.9 (dd, ¹*J*_{CP} = 111.8 Hz, ¹*J*_{CP} = 91.8 Hz; C_{PCS}), 124.1 (dd, ¹*J*_{CP} = 92.8 Hz, ³*J*_{CP} = 3.6 Hz; C_{PPh,ipso}), 129.1 (s, CH_{Tol,meta}), 129.2 (d, ³*J*_{CP} = 12.8 Hz; CH_{PPh,meta}), 129.7 (d, ⁴*J*_{CP} = 1.9 Hz; CH_{Tol,ortho}), 133.5 (d, ⁴*J*_{CP} = 2.9 Hz; CH_{PPh,para}), 135.2 (dd, ²*J*_{CP} = 10.2 Hz, ⁴*J*_{CP} = 1.9 Hz; CH_{PPh,ortho}), 142.4 (s, C_{Tol,para}), 143.9 (s, C_{Tol,ipso}). ³¹P{¹H}-NMR (162.0 MHz, CD₂Cl₂): δ [ppm] = 19.7 (d, ²*J*_{PP} = 110.1 Hz), 159.2 (br). 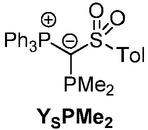 In einem 50 mL Schlenkrohr wurden 299 mg (0.56 mmol) des Ylid-funktionalisierten Dichlorphosphans in 10 mL THF gelöst und langsam mit 2.35 mL (1.13 mmol, 0.48 M) Methyllithium in THF versetzt. Nach Rühren der Lösung über Nacht wurde das Lösungsmittel im Vakuum entfernt und der Rückstand in 15 mL Benzol gelöst. Danach wurde die Suspension mit einer Filterkanüle abfiltriert und das Lösemittel erneut im Vakuum entfernt. Nach Trocknen im Vakuum kann das Dimethylphosphan als farbloser Feststoff (0.38 g, 0.78 mmol; 82 %) isoliert werden.

¹H-NMR (500.1 MHz, C₆D₆): δ [ppm] = 1.70 (s, 6 H; CH_{3,PMe}), 1.96 (s, 3 H; CH_{3,Tol}), 6.74-6.75 (m, 2 H; CH_{Tol,meta}), 6.96-6.99 (m, 6 H; CH_{PPh,meta}), 7.03-7.05 (m, 3 H; CH_{PPh,para}), 7.59-7.60 (m, 2 H; CH_{Tol,ortho}), 7.75-7.77 (m, 6 H; CH_{PPh,ortho}). ¹³C{¹H}-NMR (125.8 MHz, C₆D₆): δ [ppm] = 16.0 (dd, ¹*J*_{CP} = 13.9 Hz, ³*J*_{CP} = 6.5 Hz; CH_{3,PMe}), 21.1 (s, CH_{3,Tol}), 42.2 (dd, ¹*J*_{CP} = 107.8 Hz, ¹*J*_{CP} = 53.7 Hz; C_{PCS}), 126.9 (s, CH_{Tol,ortho}), 128.3 (d, ³*J*_{CP} = 12.0 Hz; CH_{PPh,meta}), 128.6 (s, CH_{Tol,meta}), 131.7 (d, ⁴*J*_{CP} = 2.8 Hz; CH_{PPh,para}), 135.0 (dd, ²*J*_{CP} = 9.5 Hz, ⁴*J*_{CP} = 2.5 Hz; CH_{PPh,ortho}), 139.8 (s, C_{Tol,para}), 148.5 (s, C_{Tol,ipso}). ³¹P{¹H}-NMR (162.0 MHz, C₆D₆): δ [ppm] = -46.4 (d, ²*J*_{PP} = 146.5 Hz), 23.6 (d, ²*J*_{PP} = 146.5 Hz). TEP = 2059.7 cm⁻¹.

Entsprechend dieser Vorschrift erfolgte die Darstellung der einfachen Ylid-funktionalisierten Phosphane mit On = PPh₃, X = SO₂Tol oder CN, R=R'= Ph, Me, iPr oder Cy.

Darüber hinaus wurde entsprechend dieser Vorschrift das Bisylid-funktionalisierte Posphan Y₂PCy mit On = PPh₃ und X = CN dargestellt.

### C) Darstellung durch Phosphorylierung und Deprotonierung von Oniumsalzen (Route B)

Die entsprechenden Oniumsalze sind entweder käuflich erwerbbar oder können nach Standardsynthesemethoden wie der Quartärnisierung entsprechender Phosphan-, Sulfid- oder Aminvorstufen mit Alkylhalogeniden und -tosylaten dargestellt werden. Die Salze (wie z.B. **A** im folgenden Schema) lassen sich mit Metallbasen wie Kalium-tert-butanolat, Metallhydriden oder Lithium/Natrium/Kalium-bis(trimethylsilyl)amid deprotonieren und direkt mit dem Halogenphosphan zum phosphanyl-substituierten Oniumsalz (z.B. **B**) umsetzen. Dieses kann ohne Aufarbeitung mit einem weiteren Äquivalent Base in das gewünschte Ylid-funktionalisierten Phosphan überführt werden. Einfache Vertreter lassen sich von den kommerziell erhältlichen Bis(diphenylphosphino)methan und Bis(dicyclohexylphosphino)methan durch Quartärnisierung mit Alkylhalogeniden und anschließender Deprotonierung gewinnen (J. Langer et al., ARKIVOC, 3, 210 (2012)). Andere Funktionalisierungen können gemäß dem folgenden Schema realisiert werden. Als On-Einheit haben sich insbesondere Phosphane, Sulfide, Amine, Imine, *N*-Heterocyclen und Sulfoxide als geeignet erwiesen:

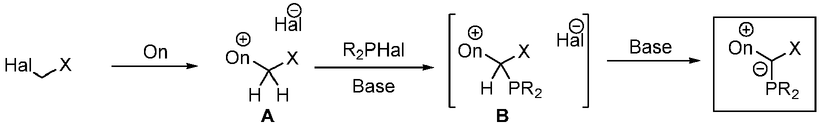

### D) Ausführungsbeispiele: Synthese von Methyl- (Z = Me), Phenyl- (Z = Ph) und Silylfunktionalisierten (Z = SiMe₃) Ylidphosphanen

Das Oniumsalz **A** (hier: Ethyltriphenylphosphoniumiodid) mit X = Me und Hal = I kann entsprechend bekannter Literaturvorschriften dargestellt (M. N. Alberti et al., Org. Lett., 10, 2465 (2008)) oder käuflich (CAS: 4736-60-1) erworben werden. Die Bildung des Ylid-funktionalisierten Phosphans Y_{Me}PCy₂ mit R=Cy erfolgt gemäß: 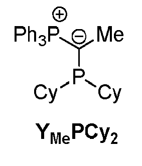 1.90 g (4.50 mmol) Ethyltriphenylphosphoniumiodid und 500 mg (12.5 mmol) Kaliumhydrid wurden in 20 ml THF gegeben. Die Suspension wurde für 4 Stunden auf 60 °C erwärmt, woraufhin keine Bildung von Wasserstoff mehr beobachtet werden konnte. Anschließend wurden 1.60 g (5.0 mmol) Dicyclohexyliodphosphan tropfenweise hinzugegeben und das Gemisch erneut für 16 Stunden auf 60 °C erhitzt. Nach Entfernen des Lösungsmittels im Vakuum wurden 20 mL Hexan hinzugegeben. Das Gemisch wurde bis zum Siedepunkt erhitzt und heiß filtriert. Das Lösungsmittel wurde erneut im Vakuum entfernt und der verbleibende Feststoff in einer möglichst geringen Menge eines 1:1 Gemisches aus Hexan und Toluol gelöst. Durch Lagerung der Lösung bei -75 °C für drei Tage konnte das gewünschte Phosphan als oranger, kristalliner Feststoff isoliert werden (1.63 g, 3.35 mmol, 74%).

¹H NMR: (400.1 MHz, CD₂Cl₂): δ = 1.20-1.59 (m, 10H, *Cy),* 1.70- 1.89 (m, 6H, *Cy),* 1.89-2.07 (m, 4H, *Cy),* 2.11 (dd, 3H, ³*J*_{HP} = 16.3 Hz, ³*J*_{HP} = 2.4 Hz, CH₃), 2.21-2.30 (m, 2H, *Cy),* 7.05-7.10 (m, 9H, C*H*_{PPh}, ₒᵣₜₕₒ and C*H*_{PPh}, ₚₐᵣₐ), 7.69-7.79 (m, 6H, C*H*_{PPh}, ₘₑₜₐ), ³¹P{¹H}-NMR: (162.1 MHz, , CD₂Cl₂): δ = -2.44 (d, ²*J*_{PP} = 176.8 Hz, *P*Cy₂), 25.4 (d, ²*J*_{PP} = 176.8 Hz, *P*Ph₃). TEP: 2050.1 cm⁻¹.

Nach dieser Vorschrift erfolgte auch die Darstellung der Ylid-funktionalisierten Phosphane mit On = PPh₃, X = Et, CH₂Ph, Cy, SiMe₃, R=R'= Ph, Me oder Cy. 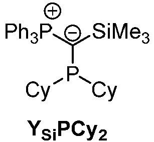 2.00 g (4.20 mmol) Trimethylsilymethylenphenylphosphoniumiodid und 250 mg (6.23 mmol) Kaliumhydrid wurden in 20 ml THF gegeben. Die Suspension wurde für 16 Stunden bei Raumtemperatur gerührt, woraufhin keine Bildung von Wasserstoff mehr beobachtet werden konnte. Die gelbe Suspension wurde filtriert, mit 5 ml THF gewaschen und in einen Tropftrichter überführt und langsam in eine Lösung von Dicyclohexyliodophosphan (1.5 g, 4.63 mmol) in 20 ml Toluol bei -78 °C zugetropft. Die Lösung wurde langsam auf RT erwärmt und dann 24 h gerührt. Der ausgefallene Feststoff wurde abfiltriert und 2 Mal mit 5 ml Toluol gewaschen und im Vakuum getrocknet. Der Feststoff und 670 mg KHMDS (3.36 mmol) wurden in 20 ml THF gelöst und 1 Stunde gerührt. Der ausgefallene Feststoff wurde durch Filtration entfernt, das Lösungsmittel im Vakuum entfernt und der zurückgebliebene Feststoff in 50 ml kochendem Hexan gelöst und heiß filtriert. Die Lösung wurde langsam auf RT abgekühlt und 16 Stunden stehen gelassen. Die Lösung über den enstandenen gelben Kristallen wurde entfernt und die Kristalle dreimal mit 5 ml kaltem Hexan gewaschen und anschließend im Vakuum getrocknet. (1.07 g, 1.98 mmol, 47%).

¹H NMR: (400.1 MHz, C₆D₆): δ = 0.28 (s, 6.3 H, SiMe₃, *trans*)*,* 0.40 (s, 2.7 H, SiMe₃, *cis*), 0.89-2.25 (m, 20H, *Cy,*)*,* 2.34-2.60 (m, 2H, *Cy),* 7.02-7.11 (m, 9H, C*H*_{PPh}, ₒᵣₜₕₒ and C*H*_{PPh}, ₚₐᵣₐ), 7.73-7.82(m, 6H, C*H*_{PPh}, ₘₑₜₐ), ³¹P{¹H}-NMR: (162.1 MHz, , C₆D₆): δ = 8.3 (d, ²*J*_{PP} = 37.2 Hz, *P*Cy₂, *cis*) *,* 12.8 (d, ²*J*_{PP} = 172.2 Hz, *P*Cy₂, *trans*)*,* 19.7 (d, ²*J*_{PP} = 37.2 Hz, PPh₃, *cis*) , 29.1 (d, ²*J*_{PP} = 172.2 Hz, PPh₃, *trans*)*,.* TEP: 2048.9 cm⁻¹. 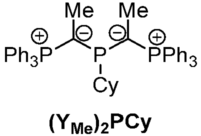 4.00 g (10 mmol) Ethyltriphenylphosphoniumiodid und 600 mg (15 mmol) Kaliumhydrid wurden in 20 ml THF gegeben. Die Suspension wurde für 16 Stunden bei Raumtemperatur gerührt, woraufhin keine Bildung von Wasserstoff mehr beobachtet werden konnte. Die rote Suspension wurde filtriert, mit 5 ml THF gewaschen und in einen Tropftrichter überführt und langsam in eine Lösung von Cyclohexyldichlorophosphan (460 mg, 2.5 mmol) in 20 ml THF unter starkem Rühren zugetropft. Die Lösung wurde 16h bei RT gerührt. Der ausgefallene Feststoff wurde abfiltriert und 2 Mal mit 10 ml THF gewaschen. Das Lösungsmittel der erhaltenen roten Lösung wurde im Vakuum entfernt und der erhaltene Feststoff im Vakuum getrocknet. 20 ml Cyclohexan wurde zugegeben, zum Sieden erhitzt, heiß filtriert und dann langsam auf RT gekühlt, wobei ein roter Feststoff ausfiel. Die überstehende Lösung wurde entfernt und der Feststoff 2 mal mit 2 ml Pentan gewaschen und im Vakuum getrocknet. (0.68 g, 0.98 mmol, 39%).

¹H NMR: (400.1 MHz, C₆D*₆*): δ = 1.17-1.36 (m, 3H, *Cy,*)*,* 1.47-1.60 (m, 2H, *Cy,*)*,* 1.70-1.80 (m, 1H, *Cy,*)*,* 1.84-1.94 (m, 2H, *Cy,*)*,* 2.22-2.32 (m, 2H, *Cy),* 2.52 (dd, ³*J*_{HP} = 17.4 Hz, ³*J*_{HP} = 2.0 Hz 6H, *Me*), 2.75-2.86 (m, 1H, *Cy),* 7.98-7.04 (m, 12H, C*H*_{PPh}, ₒᵣₜₕₒ), 7.04-7.11 (m, 6H, C*H*_{PPh}, ₚₐᵣₐ), 7.62-7.70(m, 12H, C*H*_{PPh}, ₘₑₜₐ), ³¹P{¹H}-NMR: (162.1 MHz, , C₆D₆): δ = -20.3 (t, ²*J*_{PP} = 175.1 Hz, *P*Cy) , 19.5 (d, ²*J*_{PP} = 175.1 Hz, *P*Ph₃) 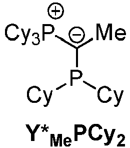 In einem Schlenkkolben wurden 10.0 g (22.9 mmol) Ethyltricyclohexylphosphoniumiodid in 75 ml THF suspendiert. Die Suspension wurde in einem Eisbad auf 0°C gekühlt und es wurde langsam 14.5 ml (22.9 mmol) einer 1.58 M Lösung von *n*-BuLi in Hexanen zugetropft. Die nun klare Lösung wurde auf Raumtemperatur erwärmt und es wurden 2.45 ml (2.67 g, 11.5 mmol) Dicyclohexylphosphanchlorid zugegeben. Ein farbloser Feststoff fiel sofort aus und die Suspension wurde 16h auf 60 °C erhitzt. Der farblose Feststoff wurde abfiltriert und zwei Mal mit je 20 ml THF gewaschen und unter Argon gelagert. Das Filtrat wurde im Vakuum getrocknet und der daraus resultierende Feststoff in 100 ml Cyclohexan gelöst, filtriert und das Cyclohexan wieder im Vakuum entfernt. Nach Trocknem im Vakuum konnte das Produkt als farbloser Feststoff isoliert werden. (4.93 g, 9.77 mmol, 85 %).

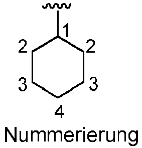

¹H NMR (400 MHz, C₆D₆) δ = 1.08 - 1.23 (m, 9H, C*H*_{2, PCy3, H3 + H4}), 1.32 - 1.43 (m, 2H, C*H*_{2, PCy2, H4}), 1.43 - 1.58 (m, 12H, C*H*_{2, PCy3, H2 + PCy2, H2 + H3}), 1.58 - 1.66 (m, 5H, C*H*_{2, PCy3, H4 + PCy2}, _{H2}), 1.67 - 1.79 (m, 6H, C*H*_{2, PCy3, H3}), 1.76 - 1.83 (m, 2H, C*H*_{2, PCy2, H4}), 1.82 - 1.96 (m, 11H, C*H*_{2, PCy3, H2 + PCy2, H2 +} C*H*₃), 1.95 - 2.09 (m, 4H, C*H*_{2, PCy3, H3} + C*H*, _{PCy2, H1}), 2.11 - 2.23 (m, 2H, C*H*_{2, PCy2, H2}), 2.23 - 2.34 (m, 2H, C*H*_{2, PCy2, H3}), 2.34 - 2.52 (m, 3H, C*H*, _{PCy3, H1}) ppm. ¹³C {¹H} NMR (101 MHz, C₆D₆) δ = -1.7 (dd, ¹*J*_{CP} = 108.8 Hz, ¹*J*_{CP} = 21.1 Hz, P-*C*⁻-P), 14.8 (dd, ²*J*_{CP} = 8.4 Hz, ²*J*_{CP} = 0.7 Hz, *C*H₃), 26.6 - 27.0 (m, *C*H₂, _{PCy3, C4}), 27.7 - 27.8 (m, *C*H_{2, PCy2, C4}), 27.8 (d, ³*J*_{CP} = 11.0 Hz, *C*H_{2, PCy3, C3}), 28.0 - 28.4 (m, *C*H_{2, PCy3, C2}), 28.5 (d, ³*J*_{CP} = 11.8 Hz, *C*H_{2, PCy2, C3}), 29.0 (d, ³*J*_{CP} = 8.1 Hz, *C*H_{2, PCy2, C3}), 32.9 (d, ²*J*_{CP} = 9.9 Hz, *C*H_{2, PCy2, C2}), 33.67 (dd, ¹*J*_{CP} = 49.5 Hz, ³*J*_{CP} = 8.9 Hz, CH, _{PCy3, C1}) 33.69 (d, ²*J*_{CP} = 19.8 Hz, *C*H_{2, PCy2, C2}), 38.4 (dd, ¹*J*_{CP} =13.8 Hz, ³*J*_{CP} = 5.3 Hz, *C*H, _{PCy2, C1}) ppm. ³¹P {¹H} NMR (162 MHz, C₆D₆) δ = 1.0 (d, ²*J*_{PP} = 128.9 Hz, *P*Cy₂), 30.6 (d, ²*J*_{PP} = 128.9 Hz, *P*Cy₃) ppm. CHNS: Berechnet: C: 76.14, H: 11.58. Gemessen: C: 75.62, H: 11.32.

### Rückgewinnung von Ethyltricyclohexylphosphoniumiodid

Der farblose Feststoff, der nach dem Waschen mit THF zurückblieb wurde im Vakuum getrocknet und in 15 ml DCM gelöst. Die Lösung wurde filtriert und das Lösungsmittel im Vakuum entfernt und getrocknet. Ethyltricyclohexylphosphoniumiodid wurde als farbloser Feststoff erhalten. (4.27 g, 9.8 mmol, 85 %). 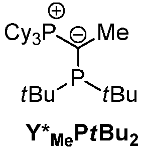 In einem Schlenkkolben wurden 2.55 g (5.84 mmol) Ethyltricyclohexylphosphoniumiodid in 25 ml THF suspendiert. Die Suspension wurde in einem Eisbad auf 0°C gekühlt und es wurde langsam 2.78 ml (5.84 mmol) einer 2.1 M Lösung von nBuLi in Hexanen zugetropft. Die nun klare Lösung wurde auf Raumtemperatur erwärmt. Es wurden 0.55 ml (0.53 g, 2.92 mmol) Di-*tert*butylchlorphosphan zugegeben und 16h lang auf 60 °C erwärmt. Der farblose Feststoff wurde abfiltriert und zwei Mal mit je 5 ml THF gewaschen. Das 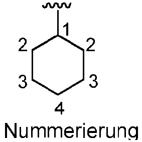 Filtrat wurde im Vakuum getrocknet und der daraus resultierende Feststoff in 50 ml Cyclohexan gelöst. Nach erneuter Filtration wurde das Lösungmittel im Vakuum entfernt und das Produkt als farbloser Feststoff isoliert (1.32 g, 1.51 mmol, 52 %; nicht optimierte Ausbeute).

¹H NMR (400 MHz, C₆D₆) δ = 1.08 - 1.24 (m, 9H, C*H*_{2, Cy, H3 + H4}), 1.54 (d, ³*J*_{HP} = 10.7 Hz, 18H, C*H*3, *t*Bu), 1.44 - 1.67 (m, 9H, C*H*_{2, Cy, H2 + H4}), 1.63 - 1.76 (m, 6H, C*H*_{2, Cy, H3}), 2.04 (d, ³*J*_{PH} = 13.0 Hz, 6H, C*H*_{2, Cy, H2}), 2.11 (dd, ³*J*_{HP} = 13.8 Hz, ³*J*_{HP} = 3.1 Hz, 3H, C*H*₃), 2.16 - 2.32 (m, 3H, C*H*, _{Cy, H1}) ppm. ¹³C {¹H} NMR (101 MHz, C₆D₆) δ = 4.5 (dd, ¹*J*_{CP} = 102.9 Hz, ¹*J*_{CP} = 27.3 Hz, P-*C*⁻-P), 18.2 (dd, ²*J*_{CP} = 8.6 Hz, ²*J*_{CP} = 0.6 Hz, CH₃), 27.0 (*C*H_{2, Cy, C4}), 28.2 (d, ³*J*_{CP} = 10.6 Hz, *C*H_{2, Cy, C3}), 29.6 - 29.8 (m, *C*H_{2, Cy, C2}), 33.3 (d, ²*J*_{CP} = 14.4 Hz, CH3, *t*Bu), 36.5 (dd, ¹*J*_{CP} = 23.4 Hz, ¹*J*_{CP} = 6.6 Hz, *C*,_{*t*Bu}) 37.0 (dd, ¹*J*_{CP} = 47.9 Hz, ³*J*_{CP} = 9.0 Hz, *C*H, _{Cy, C1}) ppm. ³¹P {¹H} NMR (162 MHz, C₆D₆) δ = 26.4 (d, ²*J*_{PP} = 146.9 Hz, *Pt*Bu₂), 30.4 (d, ²*J*_{PP} = 146.9 Hz, *P*Cy₃) ppm.

In einem Schlenkrohr wurden 500 mg (1.11 mmol) Benzyltricyclohexylphosphoniumiodid eingewogen und in 10 mL THF suspendiert. Zu der Suspension wurden langsam 0.51 mL (1.11 mmol; 1 eq.) einer n-BuLi-Lösung (2.18 M in Hexan) zugetropft bis sich eine klare Lösung gebildet hatte. Die Lösung wurde 45 min gerührt und anschließend 0.32 mL (335 mg; 1.44 mmol; 1.3 eq.) Cy₂PCl zugetropft. Die Suspension wurde 16h bei Raumtemperatur gerührt. Der Feststoff wurde abfiltriert und zwei Mal mit je 10 mL THF gewaschen und 1.5 h im Hochvakuum getrocknet (558 mg). Der erhaltene Feststoff sowie 133 mg (1.19 mmol) Kalium-*tert*-butanolat wurden in ein Schlenkrohr eingewogen und in 20 mL trockenem Toluol suspendiert. Die Suspension wurde 16h gerührt und dann abfiltriert. Der Feststoff wurde 2-mal mit 10 ml Toluol gewaschen. Das Lösemittel des Filtrats wurde im Vakuum entfernt und das Produkt als farbloser Feststoff erhalten (0.35 g, 0.62 mmol, 56 %; nicht optimierte Ausbeute).

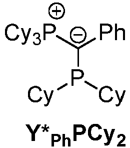

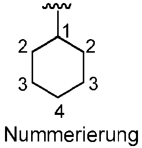

¹H NMR (400 MHz, Tol-d₈) δ = 1.00 - 1.22 (m, 9H, C*H*_{2, PCy3, H3 + H4}), 1.22 - 1.64 (m, 19H, C*H*_{2, PCy2, H2 + H3 + H4 PCy3, H2, H3}), 1.64- 1.83 (m, 12H, C*H*_{2, PCy2, H3 + H4 PCy3,} , _{H3}), 1.83- 2.01 (m, 10H, C*H*_{2, PCy2, H2 PCy3,} , _{H2}), 2.33-2.46 (m, 5H, C*H*, _{PCy2, H1, PCy3, H1}), 6.97- 7.00 (m, 1H, C*H*, _{Ph, para}), 7.18-7.25 (m, 2H, CH, _{Ph,} meta), 7.34- 7.40 (m, 2H, C*H*, Ph, ortho) ppm. ³¹P{¹H}-NMR (162.1MHz, Tol-d₈): δ [ppm]= -5.4 (d, ²*J*_{PP} = 132.0 Hz, *Pt*Bu₂), 21.5 (d, ²*J*_{PP} = 132.0 Hz,) ppm.

### Beispiel 2:Darstellung von Übergangsmetallkomplexen der Ylid-funktionalisierten Phosphanen

### A) Nickelcarbonyl-komplexe

Beispielhaft wird hier die Synthese - des Komplexes mit dem aus Beispiel 1.B) darge-stellten Ylid-funktionalisierten Dimethylphosphans mit On = PPh₃, R=R'=Me, X = SO₂Tol beschrieben.

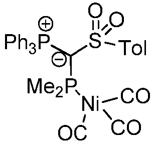

In einem 30 mL Schlenkrohr wurden 0.10 g (0.20 mmol) des Phosphans in 5 mL Pentan suspendiert. Danach wurden 0.43 mL (0.31 mmol) 0.7 M Nickeltetracarbonyl in Benzol schnell zuggetropft und das Reaktionsgemisch für 2 h bei Raumtemperatur gerührt. Anschließend wurde das Lösemittel mittels Kanüle entnommen und der Feststoff zweimal mit je 5 mL Pentan gewaschen. Nach Abnehmen des Lösungsmittels und Trocknen im Vakuum wurde der Komplex als gräulicher Feststoff erhalten (79.1 mg, 0.13 mmol, 61 %).

¹H-NMR (500.1 MHz, CD₂Cl₂): δ [ppm] = 1.97 (d, ²*J*_{PH} = 4.70 Hz, 6 H; CH_{3,PMe}), 2.30 (s, 3 H; CH_{3,Tol}), 6.93-6.95 (m, 2 H; CH_{Tol,meta}), 7.16-7.17 (m, 2 H; CH_{Tol,ortho}), 7.38-7.42(m, 6 H; CH_{PPh,meta}), 7.53-7.58(m, 9 H; CH_{PPh,ortho+para}). ¹³C{¹H}-NMR (125.8 MHz, CD₂Cl₂): δ [ppm] = 21.4 (s, CH_{3,Tol}), 23.4 (dd, ¹*J*_{CP} = 26.8 Hz, ³*J*_{CP} = 3.5 Hz; CH_{3,PMe}), 39.1 (dd, ¹*J*_{CP} = 105.6 Hz, ¹*J*_{CP} = 3.2 Hz; C_{PCS}), 125.9 (s, CH_{Tol,ortho}), 126.9 (dd, ¹*J*_{CP} = 91.5 Hz, ³*J*_{CP} = 1.9 Hz; C_{PPh,ipso}), 128.8 (d, ³*J*_{CP} = 12.4 Hz; CH_{PPh,meta}), 129.0 (s, CH_{Tol,meta}), 132.8 (d, ⁴*J*_{CP} = 3.0 Hz; C_{PPh,para}), 135.1 (d, ²*J*_{CP} = 9.8 Hz; CH_{PPh,ortho}), 140.7 (s, C_{Tol,para}), 146.7 (dd, ³*J*_{CP} = 1.21 Hz, ³*J*_{CP} = 1.2 Hz; CH_{Tol,ipso}), 196.2 (s, Cco). ³¹P{¹H}-NMR (162.0 MHz, CD₂Cl₂): δ [ppm] = -11.8 (d, ²*J*_{PP} = 75.6 Hz), 20.3 (d, ²*J*_{PP} = 75.6 Hz) Elementaranalyse: gemessen: C, 58.41; H, 4.51; S, 4.97. berechnet: C, 58.80; H, 4.46; S, 5.06.

### B) Goldchloridkomplexe (nicht von der Erfindung umfasst)

Beispielhaft wird hier die Synthese des Komplexes mit dem aus Beispiel 1.A. dargestellten Ylid-funktionalisierten Diphenylphosphans mit On = PPh₃, R=R'=Ph, X = SO₂Tol beschrieben. 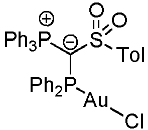 In einem 50 mL Schlenkrohr wurden 0.20 g (3.26 mmol) des Phosphans und 0.11 g (3.26 mmol) (THT)AuCl (THT = Tetrahydrothiophen) in 5 mL THF gelöst und die Reaktionsmischung über Nacht bei Raumtemperatur gerührt, wobei sich ein farbloser Niederschlag bildete. Der Feststoff wurde über eine Umkehrfritte abfiltriert und im Vakuum getrocknet, wobei der gewünschte Goldkomplex (0.32 g, 0.38 mmol, 77 %) erhalten wurde.

¹H-NMR (500.1 MHz, CD₂Cl₂): δ [ppm] = 2.27 (s, 3 H; CH₃), 6.20-6.23 (m, 2 H; CH_{Tol,ortho}), 6.70-6.72 (m, 2 H; CH_{Tol,meta}), 7.41-7.51 (m, 12 H; CH_{PPh,ortho+meta}), 7.61-7.62 (m, 2 H; CH_{AuPPh,para}), 7.63 - 7.66 (m, 7 H; CH_{AuPPh,meta+PPh,para}), 7.86-7.90 (m, 4H; CHAuPPh,ortho). ¹³C{¹H}-NMR (125.8 MHz, CD₂Cl₂): δ [ppm] = 21.3 (s, CH₃), 42.8 (dd, ¹*J*_{CP} = 101.4 Hz, ¹*J*_{CP} = 57.6 Hz; C_{PCS}), 126.0 (dd, ¹*J*_{CP} = 86.9 Hz, ³*J*_{CP} = 8.8 Hz; CPPh,ipso), 126.0 (s, CH_{Tol,ortho}), 128.5 (dd, ²*J*_{CP} = 11.7 Hz, ⁴*J*_{CP} = 0.8 Hz; CH_{PPh,ortho}), 128.9 (s, CH_{Tol,meta}), 129.1 (d, ³*J*_{CP} = 12.5 Hz; C_{PPh,meta}), 131.1 (d, ⁴*J*_{CP} = 2.6 Hz; CH_{AuPPh,para}), 133.4 (d, ⁴*J*_{CP} = 2.8 Hz; CH_{PPh,para}), 133.4 (dd, ¹*J*_{CP} = 63.0 Hz, ³*J*_{CP} = 8.2 Hz; C_{AuPPh,ipso}), 135.2 (d, ³*J*_{CP} = 13.6 Hz; CH_{AuPPh,meta}), 135.4 (dd, ²*J*_{CP} = 9.2 Hz, ⁴*J*_{CP} = 1.2 Hz; CH_{AuPPh,ortho}), 141.7 (s, C_{Tol,para}), 144.4 (s, CH_{Tol,ipso}). ³¹P{¹H}-NMR (162.0 MHz, CD₂Cl₂): δ [ppm] = 21.4 (d, ²*J*_{PP} = 68.3 Hz), 22.1 (d, ²*J*_{PP} = 68.3 Hz). Elementaranalyse: gemessen: C, 54.19; H, 3.90; S, 3.68. berechnet: C, 53.88; H, 3.81; S, 3.78.

Alle in der Katalyse (siehe unten) verwendeten Gold-Phosphan-Komplexe wurden entsprechend dieser Vorschrift dargestellt.

### C) Palladiumallyl-Komplexe

Beispielhaft wird hier die Synthese von drei Palladiumallyl-Komplexen der Ylid-substituierten Phosphane beschreiben. Komplexe mit weiteren als den hier aufgeführten Liganden können entsprechend der aufgeführten Vorschriften dargestellt werden. 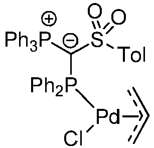 Synthese des Komplexes mit dem aus Beispiel 1.A) dargestellten Ylid-funktionalisierten Diphenylphosphans mit On = PPh₃, R=R'=Ph, X = SO₂Tol:. In einem 50 mL Schlenkrohr wurden 201 mg (0.325 mmol) des Phosphans Y_{S}PPh₂ und 59 mg (0.163 mmol) des Allylpalladium(II)chlorid-Dimers in 10 mL Dichlormethan gelöst und für 1h bei Raumtemperatur gerührt. Das Lösemittel im Vakuum wurde daraufhin auf 1 mL reduziert und die Mischung mit Pentan versetzt bis ein Feststoff ausfiel. Dieser wurde über eine Umkehrfritte abfiltriert und anschließend im Vakuum getrocknet, wobei der Palladiumkomplex als bräunlicher Feststoff (163 mg, 0.21 mmol, 63 %) erhalten wurde.

¹H-NMR (500.1 MHz, CD₂Cl₂): δ [ppm] = 1.8-2.5 (br, 2H; CH_{2,allyl}), 2.22 (s, 3 H; CH₃), 2.76 (br, 1 H; CH_{2,allyl}), 4.12 (m, 1 H; CH_{2,allyl}), 4.84 (br, 1H; CH_{allyl}), 6.71- 6.73 (m, 2 H; CH_{Tol,meta}), 6.76-6.78 (m, 2 H; CH_{Tol,ortho}), 7.16-7.18 (m, 4 H; CH_{PdPPh,meta}), 7.22-7.25 (m, 2 H; CH_{PdPPh,para}), 7.41-7.45 (m, 6 H; CH_{PPh,meta}), 7.53-7.57 (m, 3H; CH_{PPh,para}), 7.84-7.88 (m, 4H; CH_{PdPPh,ortho}), 7.97-8.01 (m, 6H; CH_{PPh,ortho}). ¹³C{¹H}-NMR (125.8 MHz, CD₂Cl₂): δ [ppm] = 21.3 (s, CH₃), 42.3 (dd, ¹*J*_{CP} = 105.2 Hz, ¹*J*_{CP} = 20.4 Hz; C_{PCS}), 64.7 (br; CH_{2,allyl}), 78.3 (d, ²*J*_{CP} = 31.8 Hz; CH_{2,allyl}), 117.7 (d, ²*J*_{CP} = 4.3 Hz; CH_{allyl}), 126.5 (s, CH_{Tol,ortho}), 127.4 (d, ²*J*_{CP} = 10.3 Hz; CHPdPPh,meta), 128.3 (dd, ¹*J*_{CP} = 94.0 Hz, ³*J*_{CP} = 1.2 Hz; C_{PPh,ipso}), 128.4 (dd, ¹*J*_{CP} = 55.1 Hz, ³*J*_{CP} = 12.4 Hz; CH_{PdPPh,ipso}), 128.5 (s, CH_{Tol,meta}), 128.5 (d, ³*J*_{CP} = 12.8 Hz; CH_{PPh,meta}), 129.4 (d, ⁴*J*_{CP} = 2.0 Hz; CH_{PdPPh,para}), 132.3 (d, ⁴*J*_{CP} = 3.0 Hz; CH_{PPh,para}), 135.2 (d, ²*J*_{CP} = 10.5 Hz; CH_{PdPPh,ortho}), 136.2 (d, ²*J*_{CP} = 10.1 Hz; CH_{PPh,ortho}), 140.9 (s, C_{Tol,para}), 144.2 (s, C_{Tol,ipso}). ³¹P{¹H}-NMR (162.0 MHz, CD₂Cl₂): δ [ppm] = 9.9 (d, ²*J*_{PP} = 67.3 Hz), 22.9 (d, ²*J*_{PP} = 67.3 Hz). 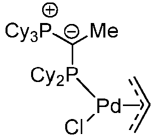 Synthese des Komplexes mit dem aus Beispiel 1.D) dargestellten Ylid-funktionalisierten Dicyclohexylphosphans mit On = PCy_{3,} R=R'=Cy, X = Me: Das Phosphan Y*_{Me}PCy₂ (300 mg, 0.60 mmol) und Allylpalladium(II)chlorid-Dimer (109 mg, 0.30 mmol) wurden in 7 ml Toluol gelöst und gerührt bis sich eine klare Lösung gebildet hatte. Das Rühren wurde eingestellt und die Lösung für 3 Tage bei Raumtemperatur gelagert. Es bildeten sich langsam gelbe Kristalle, die vom Lösemittel getrennt, dann drei Mal mit 5ml Pentan gewaschen und im Vakuum getrocknet wurden (230 mg, 0.33 mmol, 56 %; nicht optimierte Ausbeute).

¹H NMR (400 MHz, CD₂Cl₂) δ = 1.12 - 1.58 (m, 25H, C*H*_{2, PCy3 + PCy2}), 1.62 (dd, ³*J*_{HP} = 12.4 Hz, ³*J*_{HP} = 8.3 Hz, 3H, CH₃), 1.67 - 2.05 (m, 25H, C*H*_{2, PCy3 + PCy2}), 2.10 - 2.24 (m, 2H, C*H*, _{PCy2, H1}), 2.43 - 3.70 (vbr, 2H, 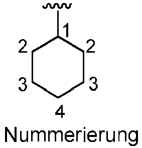 C*H*₂, _{C3H5}), 2.54 - 2.72 (m, 3H, C*H*, _{PCy3, H1}), 3.54 (dd, ²*J*_{HH} = 13.7 Hz, ³*J*_{HH} = 8.5 Hz, 1H, C*H*_{2, C3H5}), 4.25 - 4.40 (m, 1H, C*H*_{2, C3H5}), 5.19 - 5.41 (m, 1H, CH, _{C3H5}) ppm. ¹³C {¹H} NMR (101 MHz, CD₂Cl₂) δ = -2.7 (dd, ¹*J*_{CP} = 112.1, ¹*J*_{CP} = 46.8 Hz, P-*C*⁻-P), 16.4 (m, *C*H₃), 26.9 (d, ⁴*J*_{CP} = 1.5 Hz, *C*H₂, _{PCy3, C4}), 27.2 - 27.5 (m, *C*H_{2, PCy2, C4}), 27.8 (d, ³*J*_{CP} = 13.4 Hz, *C*H_{2, PCy2, C3}), 28.1 (d, ³*J*_{CP} = 11.3 Hz, *C*H_{2, PCy3, C3}), 28.60 (d, ³*J*_{CP} = 9.9 Hz, *C*H_{2, PCy2, C3}), 28.63 (d, ²*J*_{CP} = 2.6 Hz, *C*H_{2, PCy3, C2}), 30.0 - 30.5 (m, *C*H_{2, PCy2, C2}), 31.2 (d, ²*J*_{CP} = 5.2 Hz, *C*H_{2, PCy2, C2}), 32.7 - 36.6 (m, *C*H, _{PCy2, C1}), 38.4 - 39.6 (br, *C*H, _{PCy3, C1}), 52.5 - 52.9 (m, *C*H_{2, C3H5}), 79.5 (d, ²*J*_{CP} = 28.4 Hz, *C*H_{2, C3H5}), 114.9 (d, ²*J*_{CP} = 4.4 Hz, *C*H, _{C3H5}) ppm. ³¹P {¹H} NMR (162 MHz, CD₂Cl₂) δ = 20.5 (d, ²*J*_{PP} = 63.5 Hz, *P*Cy₂), 31.5 (d, ²*J*_{PP} = 63.5 Hz, *P*Cy₃) ppm. CHNS: Berechnet: C: 61.13, H: 9.23. Gemessen: C: 61.03, H: 9.34. 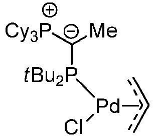 Synthese des Komplexes mit dem aus Beispiel 1.D) dargestellten Ylid-funktionalisierten Phosphans mit On = _{PCy3,} R=R'=tBu, X = Me: Das Phosphan Y*_{Me}P*t*Bu₂ (300 mg, 0.66 mmol) und Allylpalladium(II)chlorid-Dimer (115 mg, 0.32 mmol) wurden in 10 ml Toluol gelöst und für 16 h bei Raumtemperatur gerührt. Es bildete sich ein oranger Feststoff der abfiltriert, mit 10 ml Toluol gewaschen und dann im Vakuum getrocknet wurde (265 mg, 0.42 mmol, 66 %).

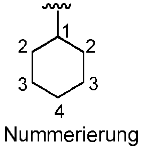

¹H NMR (400 MHz, CD₂Cl₂) δ = 1.02 - 1.56 (m, 15H, C*H*_{2, Cy, H2 + H3 + H4}), 1.21 (d, ³*J*_{HP} = 13.0 Hz, 9H, C*H*_{3, *t*Bu}), 1.47 (d, ³*J*_{HP} = 13.3 Hz, 9H, C*H*_{3, *t*Bu}), 1.57 - 1.67 (m, 3H, C*H*_{2, Cy, H4}), 1.68 - 1.89 (m, 9H, C*H*_{2, Cy, H3 +} C*H*₃), 1.84 - 1.99 (br, 3H, C*H*_{2, Cy, H2}), 2.08 - 2.20 (br, 3H, C*H*_{2, Cy, H2}), 2.69 - 2.99 (br, 3H, C*H*, _{Cy, H1}), 2.91 - 3.85 (vbr, 2H, C*H*_{2, C3H5}), 3.56 (dd, ²*J*_{HH} = 13.5 Hz, ³*J*_{HH} = 8.4 Hz, 1H, C*H*₂, _{C3H5}), 4.27 - 4.35 (m, 1H, C*H*₂, _{C3H5}), 5.16 - 5.62 (m, 1H, C*H,* _{C3H5}). ¹³C {¹H} NMR (101 MHz, CD₂Cl₂) δ = 4.0 (dd, ¹*J*_{CP} = 105.1 Hz, ¹*J*_{CP} = 41.3 Hz, P-*C*⁻-P), 18.0 - 19.5 (m, CH₃), 26.9 (d, ⁴*J*_{CP} = 1.5 Hz, *C*H₂, _{PCy3, C4}), 27.9 (d, ³*J*_{CP} = 12.4 Hz, *C*H_{2, Cy, C3}), 28.4 (d, ³*J*_{CP} = 11.0 Hz, *C*H_{2, Cy, C3}), 29.0 (*C*H_{2, Cy, C2}), 29.6 (*C*H_{2, Cy, C2}), 31.6 (*C*H3, *t*Bu), 32.9 (*C*H3, *t*Bu), 34.4 (d, ¹*J*_{CP} = 48.1 Hz, *C*H, _{Cy, C1}), 42.0 - 42.3 (m, *C*,_{*t*Bu}), 56.3 (d, ²*J*_{CP} = 2.4 Hz, *C*H_{2, C3H5}), 79.1 - 79.7 (m, *C*H_{2, C3H5}), 113.7 (*C*H, _{C3H5}) ppm. ³¹P {¹H} NMR (162 MHz, CD₂Cl₂) δ = 30.8 (d, ²*J*_{PP} = 63.4 Hz, *P*Cy₃), 58.0 (br, *Pt*Bu₂) ppm. CHNS: Berechnet: C: 58.58, H: 9.36. Gemessen: C: 58.85, H: 9.31.

### D) Palladium(0)-Komplexe und ihre oxidativen Additionsprodukte

Beispielhaft wird hier die Synthese des Palladium-Dibenzylidenaceton-Komplexes mit dem aus Beispiel 1.D) dargestellten Ylid-funktionalisierten Dicyclohexylphosphans mit On = PCy_{3,} R=R'=Cy und X = Me beschrieben. Analoge Palladium-Komplexe lassen sich über entsprechende Vorschriften mit allen anderen Phosphanliganden synthetisieren. 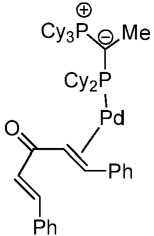 Ein *J. Young* NMR-Röhrchen wurde mit 30 mg (59 µmol) des Phosphans Y*_{Me}PCy₂ und 34 mg (59 µmol) Tris(Dibenzylidenaceton)-dipalladium(0) x Dibenzylidenaceton befüllt. Beide Feststoffe wurden in 0.6 ml deuteriertem THF suspendiert und für 30 Minuten geschüttelt. Die Reaktion wurde über NMR-Spektroskopie kontrolliert und nach Abschluss der Reaktion wurde das Produkt durch langsames Diffundieren von Pentan in die THF-Lösung kristallisiert. Das Produkt konnte in Form von roten Kristallen erhalten werden (45 mg; 53 µmol; 89%). Bei Verwendung eines Überschusses an Phosphanligand lässt sich auch der Bisphosphan-Palladium(0)-Komplex isolieren.

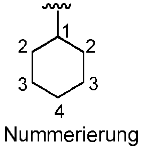

³¹P {¹H} NMR (162 MHz, THF-*d*₈) δ = 26.9 (d, ²*J*_{PP} = 82.1 Hz, *P*Cy₂)*,* 31.6 (d, ²*J*_{PP} = 82.1 Hz, *P*Cy₃). ¹H NMR (400 MHz, THF-d8) δ = 1.02 - 1.86 (m, 50H), 1.53 (dd, ²*J*_{HP} = 12.6 Hz, ²*J*_{HP} = 7.2 Hz, 3H), 1.87 - 2.06 (m, 2H, C*H*, _{PCy2, H1}), 2.09 - 2.32 (m, 3H, C*H*, _{PCy3, H1}), 5.97 - 6.17 (m, 2H, dba), 6.35 - 6.73 (m, 2H, dba), 7.10 - 7.31 (m, 8H, dba), 7.30 - 7.43 (m, 8H, dba), 7.49 - 7.63 (m, 4H, dba), 7.63 - 7.73 (m, 8H, dba), 7.73 - 7.79 (m, 2H, dba).

Beispielhaft wird hier die Synthese eines Palladium(II)-Arylchlorido-Komplexes mit dem aus Beispiel 1.D) dargestellten Ylid-funktionalisierten Dicyclohexylphosphans mit On = PCy_{3,} R=R'=Cy und X = Me beschrieben. Weitere Palladium(II)-Komplexe lassen sich analog mit allen anderen Phosphanliganden sowie mit weiteren Arylchloriden und -bromiden synthetisieren. 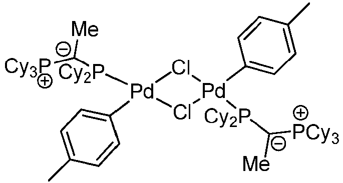 Phosphan Y*_{Me}PCy₂ (500 mg, 0.99 mmol, 1 eq.) und Bis(dibenzylidenaceton)-palladium(0) (742 mg, 1.09 mmol) wurd en bei RT in 10 ml THF für 30 Minuten gerührt. Die Lösung wurde filtriert und 1 mL *p*-Chlortoluol zugegeben und die Lösung 48h gerührt. Der dunkelgelbe Niederschlag wurde abfiltriert und 3-mal mit 10 ml THF gewaschen. Nach Trocknen im Vakuum wurde das Produkt als dunkelgelber Feststoff erhalten (515 mg, 0.69 mmol, 70 %). Der Komplex erwies sich als unlöslich in allen üblichen Lösungsmitteln, außer DCM, in dem es sich jedoch langsam zersetzt.

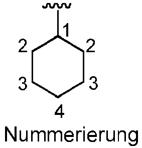

³¹P {¹H} NMR (162 MHz, CD₂Cl₂) δ = 32.5 (d, ²*J*_{PP} = 49.6 Hz), 35.1 (d, ²*J*_{PP} = 49.6 Hz) ppm. ¹H NMR (400 MHz, CD₂Cl₂) δ = 0.95 - 2.08 (m, 52H, C*H* + C*H*_{2, PCy2 + PCy3}), 1.55 (dd, ³*J*_{HP} = 12.8 Hz, ³*J*_{HP} = 9.4 Hz, 3H, C*H*₃), 2.14 (s, 3H, C*H*₃, Tolyl), 2.57 (br, 3H, C*H*, _{PCy3, H1}), 6.68 (m, 2H, C*H*, Tolyl), 7.08 (m, 2H, C*H*, _{Tolyl}) ppm.

### Beispiel 3: Übergangsmetall-katalysierte Umsetzungen mit Ylid-funktionalisierten Phosphanen

### A) Gold-katalysierte Hydroaminierung von Alkinen (nicht von der Erfindung umfasst)

Hierzu wurden die entsprechend der Vorschrift nach Beispiel 2.B) dargestellten Phosphangoldchlorid komplexe in einer 1:1-Mischung aus Alkin und Amin gelöst und mit einem Äquivalent Natrium-tetrakis[3,5-bis(trifluoromethyl)phenyl]borat versetzt. Das Gemisch wurde unter den in der nachfolgenden Tabelle aufgeführten Bedingungen zur Reaktion gebracht, wobei sich die folgenden Umsetzungen und Ausbeuten ergaben. Die Katalyse zeigte dabei kein Rückgang in Ausbeute unter wässrigen Bedingungen oder bei Aussetzen des Reaktionsgemisches gegenüber Luft.

Tabelle 1: Gold(I)-katalysierte Hydroaminierung von Phenylacetylen mit Anilin und Ylid-funktionalisierten Phosphanen.

| 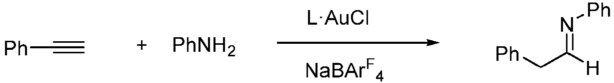 | | | | | |
|---|---|---|---|---|---|
| 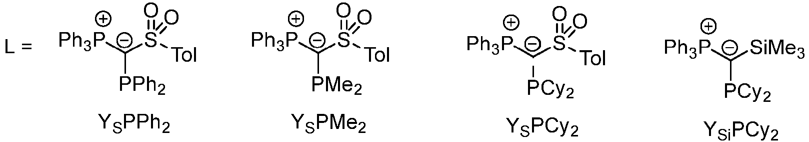 | | | | | |
| Ansatz | Katalysator L·AuCl; L = | Katalysatormenge [Mol%] | Reaktions -dauer [h] | Temp. [°C] | Ausbeute^{a} [%] |
| 1 | PPh₃ | 5 | 18 | RT | 20^{b} |
| 2 | V_{S}PPh₂ | 5 | 0.25 | RT | 70 |
| 3 | V_{S}PPh₂ | 1 | 0.25 | RT | 63 |
| 4 | V_{S}PPh₂ | 1 | 6 | RT | 99 |
| 5 | Y_{S}PPh₂ | 0.1 | 2.5 | 50 | 66 |
| 6 | V_{S}PPh₂ | 0.1 | 5 | 50 | 82 isoliert |
| 6 | V_{S}PPh₂ | 0.1 | 14 | 50 | 94 |
| 7 | V_{S}PPh₂ | 0.05 | 22 | 50 | 59 |
| 8 | V_{S}PPh₂ | 0.01 | 22 | 50 | 28 |
| 6 | _[a] | - | 24 | 50 | - |
| 7 | V_{S}PMe₂ | 0.1 | 24 | 50 | 90 |
| 8 | Y_{S}PMe₂ | 0.05 | 24 | 50 | 76 |
| 9 | Y_{S}PCy₂ | 1 | 0.25 | RT | 98 |
| 10 | Y_{S}PCy₂ | 0.1 | 6 | RT | 61 |
| 11 | Y_{S}PCY₂ | 0.1 | 22 | RT | 94 |
| 12 | Y_{S}PCy₂ | 0.1 | 5 | 50 | 95 |
| 13 | Y_{S}PCY₂ | 0.05 | 5 | 50 | 89 |
| 14 | Y_{S}PCY₂ | 0.05 | 22 | 50 | 99 |
| 15 | Y_{S}PCY₂ | 0.025 | 22 | 50 | 91 |
| 16 | Y_{S}PCy₂ | 0.01 | 22 | 50 | 51 |
| 17 | Y_{S}PCy₂ | 0.01 | 48 | 50 | 74 |
| 18 | Y_{S}PCy₂ | 0.005 | 22 | 80 | 50 |
| 19 | Y_{S}PCy₂ | 0.005 | 48 | 80 | 62 |
| 20 | Y_{Si}PCy₂ | 0.1 | 2 | 50 | 97 |

| | | | | | |
|---|---|---|---|---|---|
| a) Die Ausbeute wurde mittels NMR-Spektroskopie bestimmt. b) D. Malhotra et al. Angew. Chem. Int. Ed. 53, 4456 (2014). | | | | | |

### B) Gold-katalysierte intramolekulare O-H-Addition an Alkine (nicht von der Erfindung umfasst)

Neben der Hydroaminierung lassen sich auch OH-Additionen an Alkine bewerkstelligen. 4-Pentinsäure regiert so in THF bei Raumtemperatur mit 0.5 mol% Y_{S}PCy₂·AuCl und einer äquimolaren Menge an Natrium-tetrakis[3,5-bis(trifluoromethyl)phenyl]borat innerhalb von 14 h vollständig zum gewünschten Lacton.

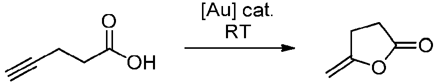

### C) Pd-katalysierte C-N-Kupplungsreaktion

Die C-N-Kupplungsreaktion von Aminen und Halogenaromaten wurden entsprechend bekannten Synthesevorschriften mit den jeweiligen Ylid-substituierten Phosphanen durchgeführt. Als Palladiumvorstufe wurde der kommerziell erhältliche Palladacyclus Di-µ-chlorobis[2'-(amino-N)[1,1'-biphenyl]-2-yl-C]dipalladium(II) verwendet und mit 1 Äquivalent des Phosphanliganden in THF umgesetzt. Unter Zugabe von Natrium-tertbutanolat wurden das Amin und der Brom- bzw. Chloraromat zur Reaktion gebracht.

**Tabelle 2: C-N-Kupplung von Phenylanilin mit Arylbromiden und -chloriden mit dem Phosphanliganden Y_{Me}PCy₂.**

| | | | | | | |
|---|---|---|---|---|---|---|
| 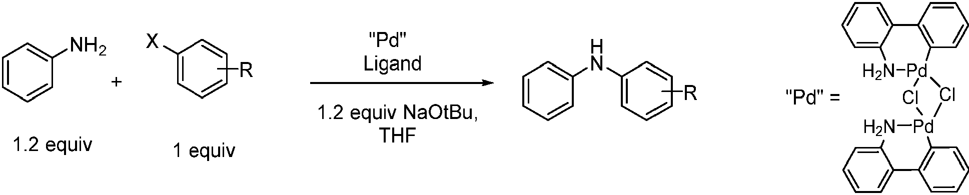 | | | | | | |
| | | | | | | |

| Ansatz | Katalysator; Ligand = | Katalysatormenge [Mol%] | Arylhalide | Reaktionsdauer [h] | Temp. [°C] | Ausbeute^{a} [%] |
|---|---|---|---|---|---|---|
| 1 | Y_{Me}PCy₂ | 5 | 2-Bromotoluene | 16 | RT | 99 |
| 2 | Y_{Me}PCy₂ | 5 | 4-Chlorobenzonitrile | 16 | RT | 40 |
| 3 | Y_{Me}PCy₂ | 5 | 4-Chlorobenzonitrile | 16 | 60 | 95 |
| 4 | Y_{Me}PCy₂ | 2.5 | 4-Chlorotoluene | 18 | 100 | 17 |
| 5 | Y_{Me}PCy₂ | 2.5 | 4-Chlorotoluene | 48 | 100 | 39 |

| | | | | | | |
|---|---|---|---|---|---|---|
| a) Die Ausbeute wurde mittels NMR-Spektroskopie bestimmt. | | | | | | |

1.5-2.0 Äquivalente Kalium-tert-butanolat (oder Natrium-tert-butanolat) wurden in der Glovebox in ein Schraubdeckelgefäß gegeben. Außerhalb der Glovebox wurden das Arylchlorid (0.9-1.2 mmol) und 1.1 Äq. eines Amins sowie 2 mL Lösungsmittel zugegeben. In einem zweiten Gefäß wurde eine Katalysatorlösung (s.u.) vorbereitet und die entsprechende Menge an Katalysator zur Reaktion gegeben. Das Reaktionsgemisch wurde bei Raumtemperatur gerührt. Nach der in der Tabelle angegebenen Zeit wurde die Reaktion mit Wasser gequenched und das Produkt über Säulenchromatographie isoliert. Alternativ wurden Ausbeuten über NMR-Spektroskopie bestimmt. Im Fall von p-Fluorchorbenzol wurde α,α,α-Trifluortoluol, im Fall der Fluorfreien Chloraromaten wurde 1,3,5-Trimethoxybenzol als interner Standard verwendet. Zur Bestimmung nach definierten Reaktionszeiten wurden kleine Mengen der Reaktionslösung entnommen und mit wenig Wasser gequencht. Die organische Phase wurde abgenommen, filtriert und das Lösungsmittel entfernt. Der Rückstand wurde in CDCl₃ gelöst und der Umsatz durch das Verhältnis der Produktpeaks zum internen Standard bestimmt.

In analoger Weise können Arylbromide in den Kupplungsreaktionen eingesetzt werden.

### Katalysatorvorbereitung:

1) Der Ligand **L1** (bzw. **L2-L6**) und eine äquimolare Menge Bis(dibenzylidenaceton)palladium(0) (oder Pd(OAc)2) wurden in THF (oder Dioxan, oder Toluol; s. Tabelle) gelöst und 30 Minuten bei Raumtemperatur gerührt. Eine entsprechende Menge der Lösung wurde anschließend zum Reaktionsgefäß gegeben.
2) Die Prekatalysatoren **P1, P2, P4-P8** wurden in THF gelöst und 30 Minuten bei Raumtemperatur gerührt. Eine entsprechende Menge der Lösung wurde anschließend zum Reaktionsgefäß gegeben.
3) Die entsprechende Menge an Prekatalysator **P3** wurde direkt zur Reaktionslösung gegeben.

### Vergleich der katalytischen Aktivität der Liganden mit bekannten Ligandsystemen

| 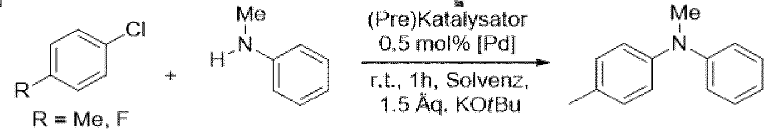 | | | |
|---|---|---|---|
| 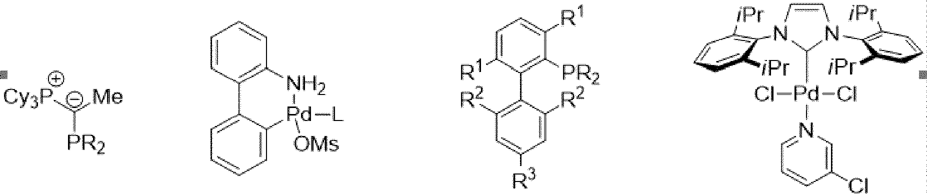 | | | |
| **L1:** R = Cy | **P4:** L = RuPhos **(L3)** | **L3:** R = Cy, R¹,R³ = H, R² = O*i*Pr | **P8:** PEPPSI-IPr |
| **L2:** R = *t*Bu | **P5:** L = BrettPhos **(L4)** | **L4:** R = Cy, R¹ = OMe, R²,R³ = *i*Pr | |
| | **P6:** L = JackiePhos **(L5)** | **L5:** R = 3,5-(CF₃)₂C₆H₃, R¹ = OMe, R²,R³ = R²,R³ = iPr | |
| | **P7:**L = Ad₂P(*n*Bu) **(L7)** | **L6: R =** *t*Bu, R¹,R²,R³ = H | |

| R | (Pre)Katalysator | Base | Lösungsmittel | Ausbeute [%]^{[a]} |
|---|---|---|---|---|
| Me | **L1**·Pd₂dba₃ | KOtBu | THF | 95 |
| Me | **L1**·Pd₂dba₃ | NaOtBu | THF | 52 |
| Me | **L1**·Pd₂dba₃ | KOtBu | dioxane | 99 |
| F | **L1**·Pd₂dba₃ | KOtBu | THF | 83 |
| F | **L1**·Pd₂dba₃ | NaOtBu | THF | 45 |
| F | **L1**·Pd₂dba₃ | KOtBu | dioxane | 88 |
| F | **L1**·Pd(OAc)₂ | KOtBu | THF | 87 |
| F | **P4** oder **P5** oder **P6** oder **P7** oder **P8** | KOtBu | THF | <1 |
| F | **L3** oder **L4** oder **L5** mit Pd₂dba₃ | KOtBu | THF | <1 |
| F | **L6**·Pd(OAc)₂^{[b]} | NaOtBu | toluene | 10 (84)^{[c]} |
| F | **L1**·Pd(OAc)₂^{[b]} | NaOtBu | toluene | 78 (88)^{[c]} |

| | | | | |
|---|---|---|---|---|
| [a] Ausbeuten wurden mittels NMR-Spektroskopie bestimmt. [b] 1 mol% Ligand. [c] Nach 19 h. | | | | |

### Anwendung verschiedener Arylchloride mit P*_{Me}PCy₂ (L1) als Liganden

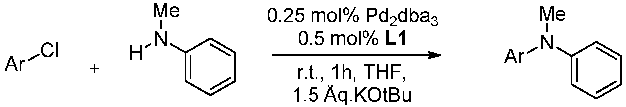

| |
|---|
| 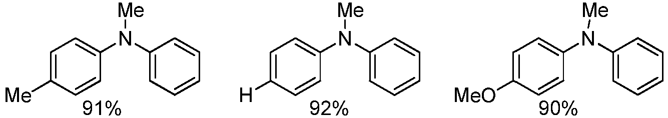 |
| 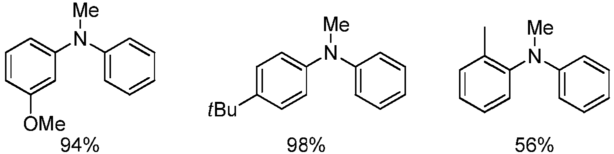 |
| 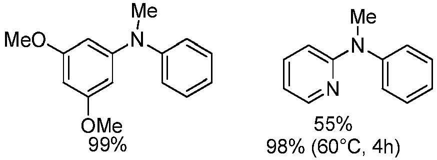 |

Ausbeuten sind isolierte Ausbeuten.

### Anwendung verschiedener Amine und Katalysatorsysteme basierend auf P*_{Me}PCy₂ (L1) und P*_{Me}PtBu₂ (L2)

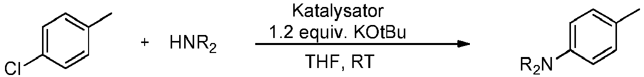

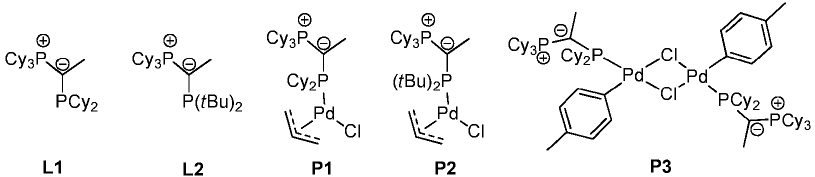

### Katalysator: L1·Pd₂dba₃

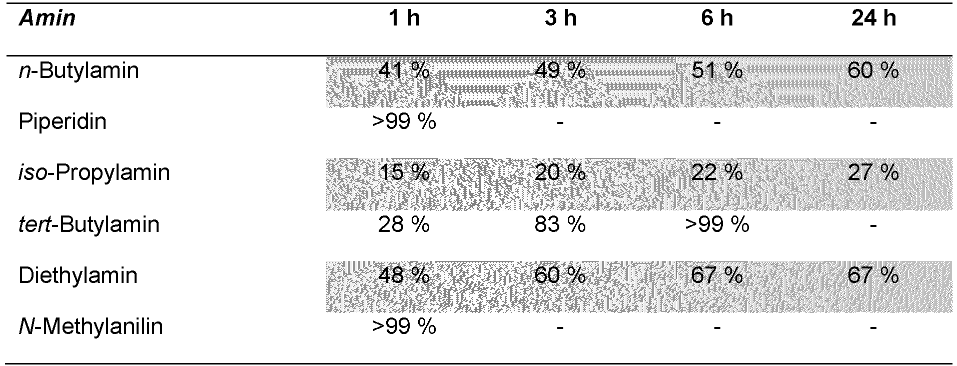

### Katalysator: L2·Pd₂dba₃

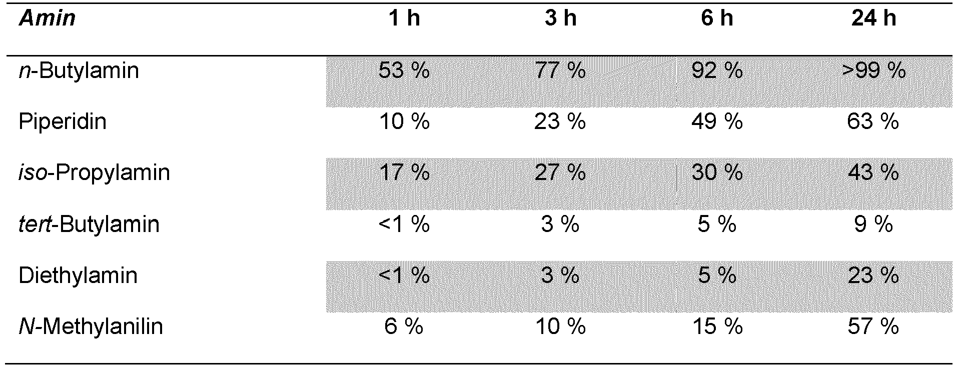

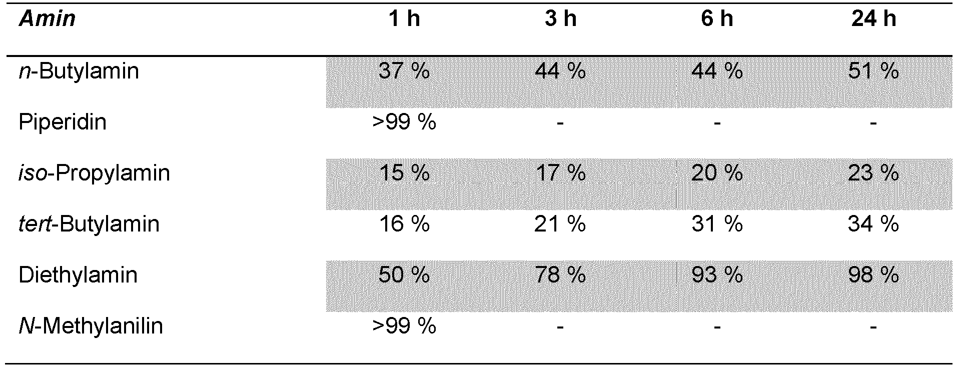

### Katalysator: P2

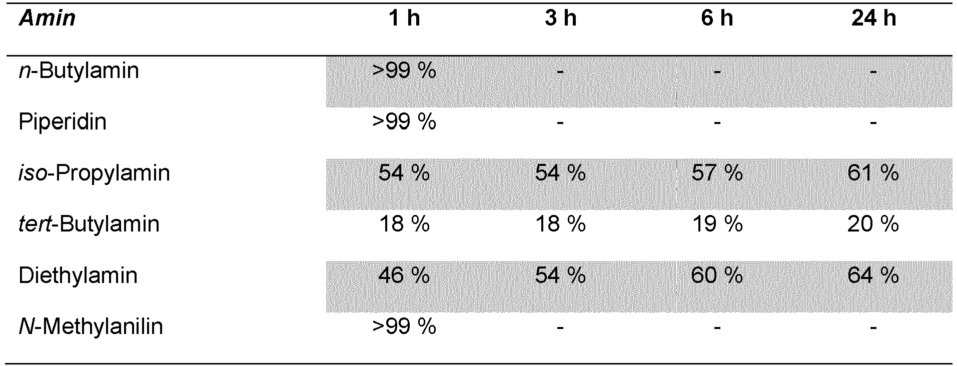

### Katalysator: P3

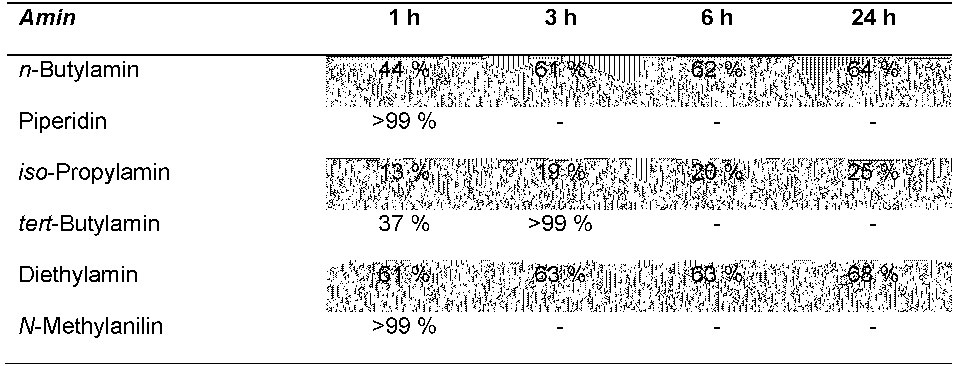

### D) Pd-katalysierte C-C-Kupplungsreaktion

Die C-C-Kupplungsreaktion von Boronsäure und Halogenaromaten wurden entsprechend bekannten Synthesevorschriften mit den jeweiligen Ylid-substituierten Phosphanen durchgeführt. Als Palladiumvorstufe wurde der kommerziell erhältliche Palladacyclus Di-µ-chlorobis[2'-(amino-N)[1,1'-biphenyl]-2-yl-C]dipalladium(II) verwendet und mit einem Äquivalent des Phosphanliganden in THF umgesetzt. Unter Zugabe von einer wässrigen Lösung von Kaliumphosphat wurden das Amin und der Brom- bzw. Chloraromat zur Reaktion gebracht.

**Tabelle 3: C-C-Kupplung von Phenylboronsäure mit Arylbromiden und -chloriden mit den Phosphanliganden Y_{Me}PCy₂ und YsPCy₂.**

| 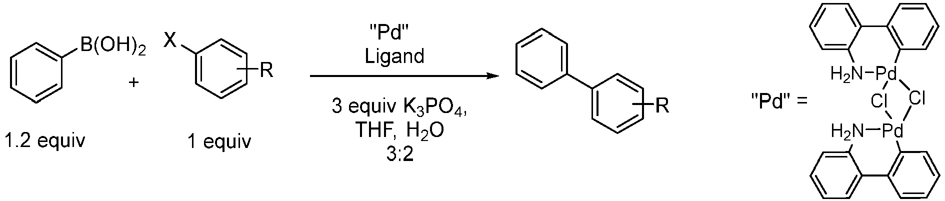 | | | | | | |
|---|---|---|---|---|---|---|
| Ansatz | Katalysator; Ligand = | Katalysatormenge [Mol%] | Arylhalide | Reaktions -dauer [h] | Temp. [°C] | Ausbeute^{a} [%] |
| 1 | Y_{S}PCy₂ | 2 | 2-Bromotoluene | 24 | RT | 60 |
| 2 | Y_{Me}PCy₂ | 2 | 2-Bromotoluene | 24 | RT | 16 |
| 3 | Y_{Me}PCy₂ | 5 | 2-Bromotoluene | 24 | 60 | 99 |
| 4 | Y_{Me}PCy₂ | 2 | 4-Bromoacetophenone | 48 | RT | 84 |
| 5 | Y_{Me}PCy₂ | 5 | 4-Chlorotoluene | 24 | 60 | 27 |
| 6 | Y_{Me}PCy₂ | 5 | 4-Chlorobenzonitrile | 24 | 60 | 95 |

| | | | | | | |
|---|---|---|---|---|---|---|
| a) Die Ausbeute wurde mittels NMR-Spektroskopie bestimmt. | | | | | | |

### Heck-Reaktion mit YPhos

In ein Schlenkgefäß mit Rührstab wurde in einer Glovebox Kaliumcarbonat gegeben. 2ml trockenes DMF (Dimethylformamid), Arylhalogenid **(1,** 1 mmol) und Olefin **(2,** 1 mmol) wurden zugegeben.

Eine Stammlösung Katalysator und ligand wurden hergestellt durch Mischen von 0.2 mmol Palladiumacetat Pd(OAc)₂ und 0.2 mmol YPhos in einem Schlenkgefäß. 1 ml trockenes THF (Tetrahydrofuran) wurden zugegeben, für 30 min gerührt und 0.1 ml der so erhaltenen Lösung zum Reaktionsgemisch zugegeben und für 3 h bei 140 °C gerührt. Ausbeuten wurden durch F- NMR Analyse mit α,α,α-Trifluorotoluen als interner Standard bestimmt.

### YPhos:

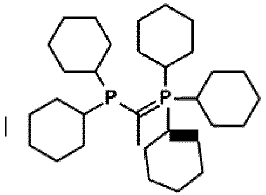

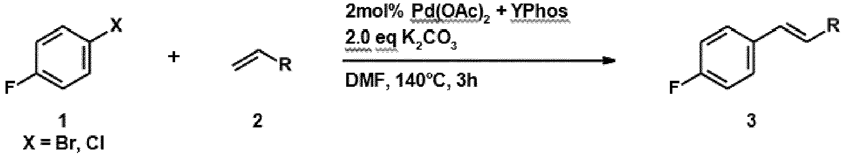

| | | | |
|---|---|---|---|
| 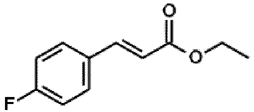 | 3a 22% (X=Br) | 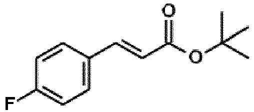 | 3b 22% (X=Br) |
| | 0% (X=Cl) | | |
| 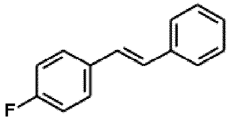 | 3c 0% (X=Br) | 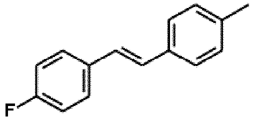 | 3d 0% (X=Br) |

### Förderung

Für das diesem Antrag zugrundeliegende Projekt wurden Fördermittel des Europäischen Forschungsrats (ERC) im Rahmen des Programms der Europäischen Union für Forschung und Innovation "Horizont 2020" bereitgestellt (Finanzhilfevereinbarung Nr. 677749)

## Patentansprüche

1. Metallkomplexe, welche Phosphanliganden der Formeln (I) oder (II) 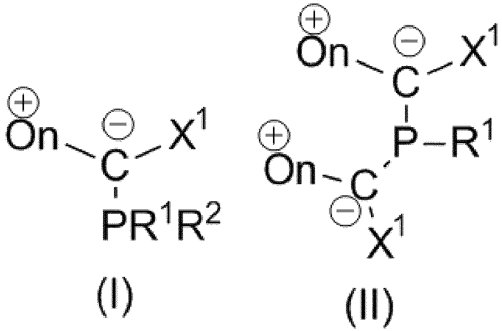 aufweisen, wobei On eine Phosphoniumgruppe -P(R³R⁴R⁵) wobei R³, R⁴ und R⁵ unabhängig voneinander ausgewählt sind aus der Gruppe bestehend aus C₁₋₆ Alkylgruppen, C_{4-C10} Cycloalkylgruppen, C₆₋₁₀ Arylgruppen, X¹ ausgewählt ist aus der Gruppe bestehend aus geradkettigen, verzweigten oder zyklischen C₁₋₆ Alkylgruppen, C₆₋₁₀ Arylgruppen, einfach- oder mehrfach ungesättigten, geradkettigen, verzweigten oder zyklischen C₂₋₆ Alkenylgruppen, eine Trialkylsilyl- (-SiR³R⁴R⁵), Arylsulfonylgruppe (R¹²SO₂- mit R¹²=C₆₋₁₀-Aryl) und R¹ und R² C₆₋₁₀ Arylgruppen oder C₁₋₆ Alkyl- und Cycloalkylgruppen und wobei die Metalle Platin, Palladium, Kupfer, Silber und Nickel verwendet werden.

2. Metallkomplexe nach Anspruch 1, wobei das Metall Palladium verwendet wird.

3. Metallkomplexe nach einem oder mehreren der vorstehenden Ansprüche, wobei R³, R⁴ und R⁵ unabhängig voneinander ausgewählt sind aus der Gruppe bestehend aus Methyl, Ethyl, Butyl, Cyclohexyl, Phenyl und deren Kombinationen.

4. Metallkomplexe nach einem oder mehreren der vorstehenden Ansprüche, wobei R³, R⁴ und R⁵ gleich sind und ausgewählt aus der Gruppe bestehend aus Methyl, Ethyl, Butyl, Cyclohexyl, Phenyl und deren Kombinationen, insbesondere Cyclohexyl und Phenyl.

5. Metallkomplexe nach einem oder mehreren der vorstehenden Ansprüche, wobei X¹ ausgewählt ist aus der Gruppe bestehend aus Methyl, Ethyl, Cyclohexyl, Phenyl, p-Tolyl, Trimethylsilyl-, p-Tolylsulfonyl oder deren Kombinationen.

6. Metallkomplexe nach einem oder mehreren der vorstehenden Ansprüche, wobei R¹ und R² unabhängig voneinander ausgewählt sind aus der Gruppe bestehend aus Phenyl, Cyclohexyl, Methyl, tert.-Butyl und deren Kombinationen.

7. Metallkomplexe nach Anspruch 1 bis 6, wobei der Komplex ein Palladium-allyl-Komplex der folgenden Struktur (V) oder ein Palladium-Arylkomplex der Struktur (VI) ist: 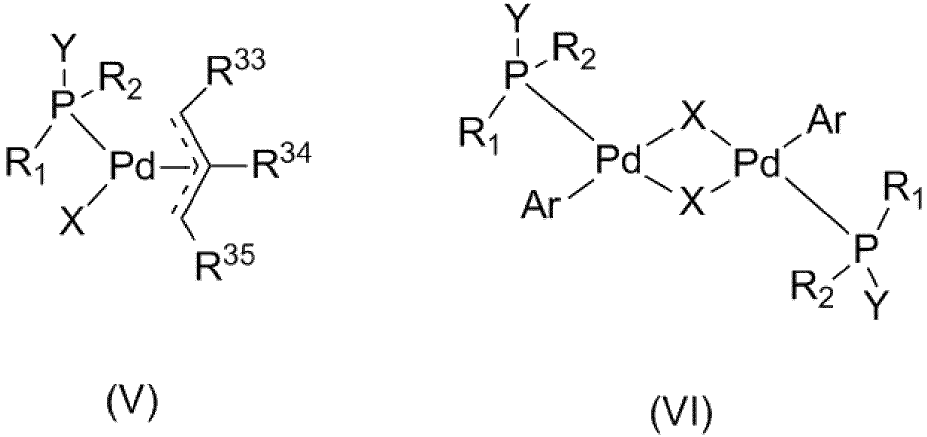 mit 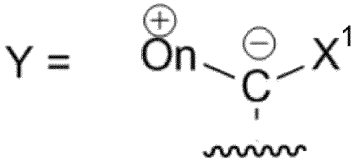
wobei X ein Anion ist,
On, X¹, Y, R¹,R²,wie in den vorstehenden Ansprüchen definiert sind,
R³³, R³⁴ und R³⁵, unabhängig voneinander ausgewählt sind aus H, Alkyl-, Aryl- und Heteroarylgruppen, die unsubstituiert oder mit funktionellen Gruppen substituiert sein können,
oder
mindestens zwei von R³³, R³⁴ und R³⁵ einen carbocyclischen Ring mit 5 bis 14 Kohlenstoffatomen bilden können,
Ar eine substituierte oder unsubstituierte, insbesondere eine substituierte ArylGruppe darstellt.

8. Metallkomplexe nach Anspruch 7, wobei R³³, R³⁴ und R³⁵, unabhängig voneinander ausgewählt sind aus geradkettigen, verzweigten oder zyklischen C₁₋₁₀ Alkylgruppen, vorzugsweise aus C₁₋₆ Alkylgruppen oder C_{4-C10} Cycloalkylgruppen, die Arylgruppen ausgewählt sind aus C₆₋₁₄ Arylgruppen, vorzugsweise aus C₆₋₁₀ Arylgruppen, die Alkenylgruppen ausgewählt sind aus einfach- oder mehrfach ungesättigten, geradkettigen, verzweigten oder zyklischen C₂₋₁₀ Alkenylgruppen, vorzugsweise aus C₂₋₆ Alkenylgruppen, und die Heteroarylgruppen ausgewählt sind aus C₆₋₁₄ Heteroarylgruppen, vorzugsweise aus C₆₋₁₀ Heteroarylgruppen, die 1 bis 5 Heteroatome ausgewählt aus N, O und S aufweisen, wobei die vorgenannten Gruppen alle mit funktionellen Gruppen substituiert sein können und/oder
mindestens zwei von R³³, R³⁴ und R³⁵ einen carbocyclischen Ring bilden, der eine C₄₋C₁₀ Cycloalkylgruppe oder eine C₆₋₁₄ Arylgruppe ist, die mir einer oder mehreren funktionellen Gruppen substituiert sein können, und
Ar ausgewählt sind aus C₆₋₁₄ Arylgruppen, vorzugsweise aus C₆₋₁₀ Arylgruppen, und die Heteroarylgruppen ausgewählt sind aus C₆₋₁₄ Heteroarylgruppen, vorzugsweise aus C₆₋₁₀ Heteroarylgruppen, die 1 bis 5 Heteroatome ausgewählt aus N, O und S aufweisen, wobei die vorgenannten Gruppen alle mit funktionellen Gruppen substituiert sein können, und
die funktionelle Gruppen ausgewählt sind aus Alkyl- (-R¹¹), insbesondere C₁₋₆ Alkylgruppen, C₆₋₁₀ Aryl- (-R¹²), Halogen- (-Hal), Hydroxy- (-OH), Cyano- (-CN), Alkoxy- (-OR³), Amino- (-NR¹¹₂, -NHR¹¹, NH₂), Mercapto- (-SH, -SR¹¹), wobei R¹¹, unabhängig von weiteren Resten R¹¹, ausgewählt ist aus C₁₋₆ Alkylresten.

9. Metallkomplexe nach Ansprüchen 7-8 wobei X ausgewählt ist aus der Gruppe Halogen, Tosylat, Nosylat und Mesylat.

10. Metallkomplexe nach einem oder mehreren der vorstehenden Ansprüche, wobei X ausgewählt ist aus der Gruppe Fluor, Chlor, Brom, Iod, Tosylat, Nosylat und Mesylat und/oder Aryl ausgewählt ist aus Phenyl, m-Tolyl, p-Tolyl, o-Tolyl, Mesityl, 1,3-Diisopropylphenyl.

## Claims

1. Metal complexes containing phosphane ligands of formulae (I) or (II) 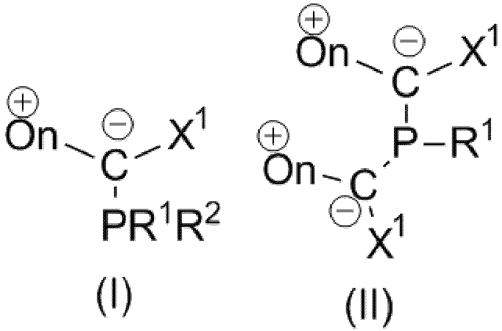 wherein On comprises a phosphonium group -P(R³R⁴R⁵) wherein R³, R⁴ and R⁵ are independently selected from the group consisting of C₁₋₆ alkyl groups, C_{4-C10} cycloalkyl groups, C₆₋₁₀ aryl groups, X¹ is selected from the group consisting of straight chain, branched or cyclic C₁₋₆ alkyl groups, C₆₋₁₀ aryl groups, mono- or polyunsaturated, straight-chain, branched or cyclic C₂₋₆ alkenyl groups, a trialkylsilyl-(-SiR³R⁴R⁵), arylsulfonyl group (R¹²SO₂- with R¹²= C₆₋₁₀ aryl) and R¹ and R² C₆₋₁₀ aryl groups or C₁₋₆ alkyl and cycloalkyl groups and wherein the metals platinum, palladium, copper, silver and nickel are used.

2. Metal complexes according to claim 1, wherein the metal palladium is used.

3. Metal complexes according to one or more of the preceding claims, wherein R³, R⁴ and R⁵ are independently selected from the group consisting of methyl, ethyl, butyl, cyclohexyl, phenyl and combinations thereof.

4. Metal complexes according to one or more of the preceding claims, wherein R³, R⁴ and R⁵ are the same and are selected from the group consisting of methyl, ethyl, butyl, cyclohexyl, phenyl and combinations thereof, in particular cyclohexyl and phenyl.

5. Metal complexes according to one or more of the preceding claims, wherein X¹ is selected from the group consisting of methyl, ethyl, cyclohexyl, phenyl, p-tolyl, trimethylsilyl, p-tolylsulfonyl or combinations thereof.

6. Metal complexes according to one or more of the preceding claims, wherein R¹ and R² are independently selected from the group consisting of phenyl, cyclohexyl, methyl, tert.-butyl and combinations thereof.

7. Metal complexes according to claims 1 to 6, wherein the complex is a palladium-allyl complex of the following structure (V) or a palladium-aryl complex of structure (VI): 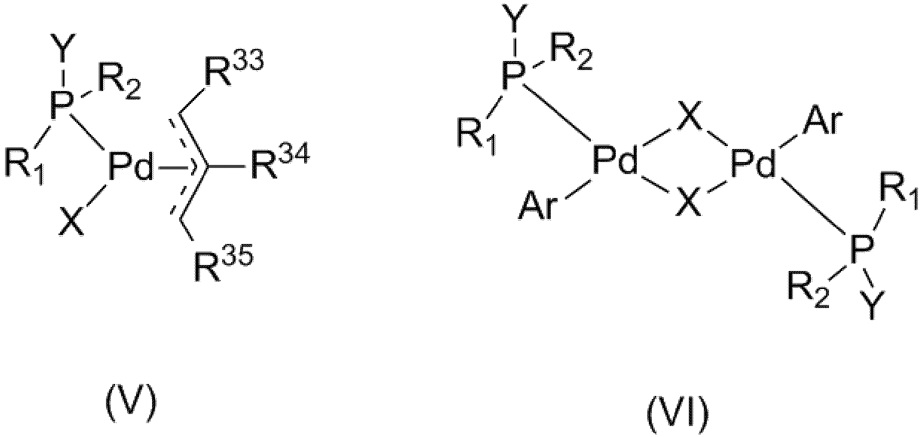 mit 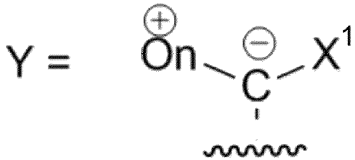
where X is an anion,
On, X¹, Y, R¹, R², as defined in the preceding claims,
R³³, R³⁴ and R³⁵, are independently selected from H, alkyl, aryl and heteroaryl groups, which may be unsubstituted or substituted with functional groups;
or
at least two of R³³, R³⁴ and R³⁵ can form a carbocyclic ring with 5 to 14 carbon atoms,
Ar is a substituted or unsubstituted, in particular a substituted aryl group.

8. Metal complexes according to claim 7, wherein R³³, R³⁴ and R³⁵ are independently selected from straight-chain, branched or cyclic C₁₋₁₀ alkyl groups, preferably from C₁₋₆ alkyl groups or C_{4-C10} cycloalkyl groups, the aryl groups are selected from C₆₋₁₄ aryl groups, preferably from C₆₋₁₀ aryl groups, the alkenyl groups are selected from mono- or polyunsaturated, straight-chain, branched or cyclic C₂₋₁₀ alkenyl groups, preferably from C₂₋₆ alkenyl groups, and the heteroaryl groups are selected from C₆₋₁₄ heteroaryl groups, preferably from C₆₋₁₀ heteroaryl groups, which have 1 to 5 hetero atoms selected from N, O and S, wherein the aforementioned groups may all be substituted with functional groups and/or
at least two of R³³, R³⁴ and R³⁵ form a carbocyclic ring which is a C_{4-C10} cycloalkyl group or a C₆₋₁₄ aryl group which may be substituted by one or more functional groups, and
Ar are selected from C₆₋₁₄ aryl groups, preferably from C₆₋₁₀ aryl groups, and the heteroaryl groups are selected from C₆₋₁₄ heteroaryl groups, preferably from C₆₋₁₀ heteroaryl groups, which have 1 to 5 heteroatoms selected from N, O and S, wherein the aforementioned groups may all be substituted with functional groups, and the functional groups are selected from alkyl (-R¹¹), in particular C₁₋₆ alkyl groups, C₆₋₁₀ aryl (-R¹²), halogen (-Hal), hydroxy (-OH), cyano (-CN), alkoxy (-OR³), amino (-NR¹¹₂, -NHR¹¹, NH₂), mercapto (-SH, -SR¹¹), wherein R¹¹, independently of further radicals R¹¹, is selected from C₁₋₆ alkyl radicals.

9. Metal complexes according to claim 11 or 12, wherein X is selected from the group consisting of halogen, tosylate, nosylate and mesylate.

10. Metal complexes according to one or more of the preceding claims, wherein X is selected from the group consisting of fluorine, chlorine, bromine, iodine, tosylate, nosylate and mesylate and/or aryl is selected from phenyl, m-tolyl, p-tolyl, o-tolyl, mesityl, 1,3-diisopropylphenyl.

## Revendications

1. Complexes métalliques qui contiennent des ligands phosphaniques de formules (I) ou (II) 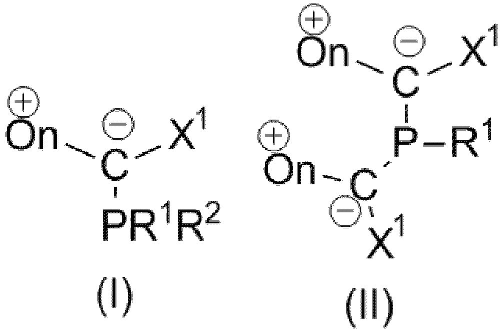 dans laquelle On représente un groupe phosphonium -P(R³R⁴R⁵) dans lequel R³, R⁴ et R⁵ sont indépendamment choisis dans le groupe constitué par les groupes alkyle en C₁₋₆, les groupes cycloalkyle en C₄₋₁₀, les groupes aryle en C₆₋₁₀, X¹ est choisi dans le groupe constitué par les groupes alkyle en C₁₋₆ linéaires, ramifiés ou cycliques, les groupes aryle en C₆₋₁₀, des groupes alcényle en C₂₋₆ linéaires, ramifiés ou cycliques, mono- ou polyinsaturés, un groupe trialkylsilyle (-SiR³R⁴R⁵), arylsul-fonyle (R¹²SO₂- avec R¹²= aryle en C₆₋₁₀) et R¹ et R² des groupes aryle en C₆₋₁₀ ou des groupes alkyle et cycloalkyle en C₁₋₆ et dans lequel on utilise les métaux platine, palladium, cuivre, argent et nickel.

2. Les complexes métalliques selon la revendication 1, dans lesquels on utilise le métal palladium.

3. Les complexes métalliques selon une ou plusieurs des revendications précédentes, dans lesquels R³, R⁴ et R⁵ sont indépendamment choisis dans le groupe constitué par les groupes méthyle, éthyle, butyle, cyclohexyle, phényle et leurs combinaisons.

4. Complexes métalliques selon une ou plusieurs des revendications précédentes, dans lesquels R³, R⁴ et R⁵ sont identiques et sont choisis dans le groupe constitué par les groupes méthyle, éthyle, butyle, cyclohexyle, phényle et leurs combinaisons, en particulier les groupes cyclohexyle et phényle.

5. Complexes métalliques selon une ou plusieurs des revendications précédentes, dans lesquels X¹ est choisi dans le groupe constitué par les groupes méthyle, éthyle, cyclohexyle, phényle, p-tolyle, triméthylsilyle, p-tolylsulfonyle ou leurs combinaisons.

6. Complexes métalliques selon une ou plusieurs des revendications précédentes, dans lesquels R¹ et R² sont choisis indépendamment dans le groupe constitué par les groupes phényle, cyclohexyle, méthyle, tert.-butyle et leurs combinaisons.

7. Complexes métalliques selon les revendications 1 à 6, dans lesquels le complexe est un complexe palladium-allyle de structure (V) suivante ou un complexe palladium-aryle de structure (VI) : 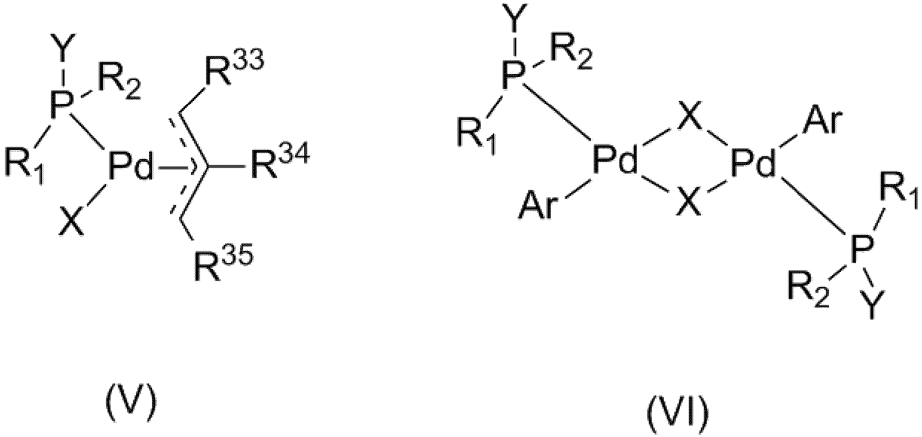 mit 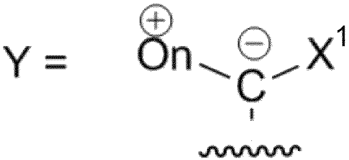
où X est un anion,
On, X¹, Y, R¹, R², tels que définis dans les revendications précédentes,
R³³, R³⁴ et R³⁵, sont choisis indépendamment parmi H, les groupes alkyle, aryle et hétéroaryle, qui peuvent être non substitués ou substitués par des groupes fonctionnels,
ou
au moins deux de R³³, R³⁴ et R³⁵ peuvent former un noyau carbocyclique ayant de 5 à 14 atomes de carbone,
Ar représente un groupe aryle substitué ou non substitué, en particulier un groupe aryle substitué.

8. Complexes métalliques selon la revendication 7, dans lesquels R³³, R³⁴ et R³⁵, indépendamment les uns des autres, sont choisis parmi les groupes alkyle en C₁₋₁₀ linéaires, ramifiés ou cycliques, de préférence parmi les groupes alkyle en C₁₋₆ ou les groupes cycloalkyle en C_{4-C10}, les groupes aryle sont choisis parmi les groupes aryle en C₆₋₁₄, de préférence parmi les groupes aryle en C₆₋₁₀, les groupes alcényle sont choisis parmi les groupes mono- ou polyinsaturés, des groupes alcényles C₂₋₁₀ linéaires, ramifiés ou cycliques, de préférence des groupes alcényles C₂₋₆, et les groupes hétéroaryles sont choisis parmi des groupes hétéroaryles C₆₋₁₄, de préférence des groupes hétéroaryles C₆₋₁₀, qui présentent 1 à 5 hétéroatomes choisis parmi N, O et S, les groupes susmentionnés pouvant tous être substitués par des groupes fonctionnels et/ou
au moins deux de R³³, R³⁴ et R³⁵ forment un noyau carbocyclique qui est un groupe cycloalkyle en C_{4-C10} ou un groupe aryle en C₆₋₁₄, qui peuvent être substitués par un ou plusieurs groupes fonctionnels, et
Ar sont choisis parmi les groupes aryle en C₆₋₁₄, de préférence parmi les groupes aryle en C₆₋₁₀, et les groupes hétéroaryle sont choisis parmi les groupes hétéroaryle en C₆₋₁₄, de préférence parmi les groupes hétéroaryle en C₆₋₁₀, qui comportent 1 à 5 hétéroatomes choisis parmi N, O et S, les groupes précités pouvant tous être substitués par des groupes fonctionnels, et
les groupes fonctionnels sont choisis parmi les groupes alkyle (-R¹¹), en particulier les groupes alkyle en C₁₋₆, les groupes aryle en C₆₋₁₀ (-R¹²), les groupes halogène (-Hal), hydroxy (-OH), cyano (-CN), alcoxy (-OR³), amino (-NR¹¹₂, -NHR¹¹, NH₂), mercapto (-SH, -SR¹¹), où R¹¹, indépendamment d'autres radicaux R¹¹, est choisi parmi les radicaux alkyle en C₁₋₆.

9. Complexes métalliques selon la revendication 11 ou 12, dans lesquels X est choisi dans le groupe constitué par un halogène, un tosylate, un nosylate et un mésylate.

10. Complexes métalliques selon une ou plusieurs des revendications précédentes, dans lesquels X est choisi dans le groupe constitué par le fluor, le chlore, le brome, l'iode, le tosylate, le nosylate et le mésylate et/ou aryle est choisi parmi phényle, m-tolyle, p-tolyle, o-tolyle, mésityle, 1,3-diisopropylphényle.
